# EUROPEAN PATENT APPLICATION

(11) **EP 4 236 449 A1**
(43) Date of publication of application: **30.08.2023**
(21) Application number: 20958126.3
(22) Date of filing: 21.10.2020
(51) Int. Cl.: H04W 36/00

(54) **IAB-NODE MIGRATION METHOD AND APPARATUS**

(71) Applicant: FUJITSU LIMITED, Kawasaki-shi, Kanagawa 211-8588 (JP)
(72) Inventor: JIA, Meiyi, Beijing 100027 (CN); LI, Guorong, Beijing 100027 (CN); LU, Yang, Beijing 100027 (CN)
(74) Representative: Haseltine Lake Kempner LLP
(86) International application number: PCT/CN2020/122610
(87) International publication number: WO 2022/082543

(57) **Abstract**

Embodiments of this disclosure provide a migration method and apparatus for an IAB-node, the method being applicable to terminal equipment and a first IAB-node. The method includes: receiving an RRC reconfiguration complete message of the terminal equipment and/or a descendant IAB-node served by the first IAB-node; and transmitting a first uplink message containing the RRC reconfiguration complete message to a target IAB donor node via a target path, or transmitting the RRC complete message to a target IAB donor node via a source IAB donor node.

## Description

### Technical Field

This disclosure relates to the field of communications.

### Background

Integrated access and backhaul (IAB) ensures wireless relay in NG-RAN. A relay node, namely, an IAB-node, supports NR access and backhaul. The backhaul may include a single hop or multi-hop. An end point of a network side NR backhaul, namely, an IAB donor, refers to a gNB that supports additional functions of the IAB. The IAB donor may also be referred to as an IAB donor node.

The IAB-node supports functions of a gNB-DU (distributed unit), i.e. an IAB-DU. The IAB-DU terminates an NR access interface to terminal equipment and a next hop of IAB-node, and terminates an F1 protocol of a gNB-CU function on the IAB donor. In addition, the IAB-node also supports a subset of terminal equipment functions (UE functions), namely, IAB-MT, which includes, for example, functions of a gNB-DU connected to another IAB-node or the IAB donor, a gNB-CU (centralized unit) connected to the IAB donor and a physical layer, layer 2 (L2), RRC (radio resource control) and NAS (non-access stratum) connected to a core network.

The IAB-node is connected to an IAB donor via one or more hops. In topology, the IAB donor is a root node, a neighboring node on the IAB-DU interface of the IAB-node is referred to as a descendant IAB-node, i.e. a descendant IAB-node, and a neighboring node on an IAB-MT interface is referred to as a parent node, i.e. a parent IAB-node.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In some cases, migration of IAB-nodes is needed. Migration of IAB-nodes may also be referred to as topology adaptation of IAB-nodes. For example, after measuring link quality, an IAB-node determines to migrate from an original path to a new path. The original path is referred to as a source path, the new path is referred to as a target path, and an IAB-node for migration is referred to as a migration IAB-node.

A scenario of the migration or topology adaptation of an IAB-node may include migration or topology adaptation within and between IAB-donor-CUs.

For the scenario of migration or topology adaptation of an IAB-node within an IAB-donor-CU, both a source parent IAB-node and a target parent IAB-node are served by the same IAB-donor-CU. The target parent IAB-node may use an IAB-donor-DU different from that of the source parent IAB-node, and the source path and the target path may have a common node.

Rel-17 eIAB supports inter-CU IAB migration. For a scenario of inter-IAB-donor-CU migration or topology adaptation of an IAB-node, the source parent IAB-node and the target parent IAB-node are served by different IAB-donor-CUs, and the target parent IAB-node uses an IAB-donor-DU different from that of the source parent IAB-node.

For the scenario of inter-IAB-donor-CU migration or topology adaptation of an IAB-node, a migration or topology adaptation process or mechanism migrating allows migration of all or a part of IAB-nodes directly or indirectly served by the IAB-node, namely, descendant IAB-nodes and/or terminal equipment; and it is assumed that at a new IAB-donor-CU, a parent-child nodes relationship (including IAB-nodes and terminal equipment) remains unchanged.

A process of inter-IAB-donor-CU migration or topology adaptation of an IAB-node involves three stages as follows: (1) migration of an IAB-MT of the migrating IAB-node; (2) migration of an IAB-DU in the migrating IAB-node; and (3) migration of terminal equipment served by the migrating IAB-node and a descendant IAB-node served by the IAB-node, that is, migration of an IAB-MT of the descendant node.

The above three stages may be processes independent of each other, and an order of executing stages (1) - (3) is not limited.

It was found by the inventors that if stages (1) and (2) are executed first and then stage (3) is executed, the terminal equipment served by the migrating IAB-node will perform connection reestablishment after detecting a radio link failure (RLF), which will result in a long time of traffic suspending. In order to overcome this defect, it is supposed that phase (3) is executed first, that is, migration of the terminal equipment served by the migrating IAB-node is performed, such as by using a signaling process similar to that of IAB-MT switch in the migrating IAB-node, following problems may occur: as stage (3) is executed first, that is, when the terminal equipment is migrated, there is no F1 connection between the migrating IAB-node and the target IAB donor, then a response message (RRC reconfiguration complete message) transmitted by the terminal equipment and/or the descendant IAB-node served by the migrating IAB-node to the migrating IAB-node may possibly be transferred to the source IAB donor. That is, in this case, the target IAB donor is unable to know whether the terminal equipment and/or the descendant IAB-node has/have executed stage (3), and is unable to restart data transmission suspended by performing the process of inter-IAB-donor-CU migration or topology adaptation of the IAB-node.

In order to solve one or more of the above problems, embodiments of this disclosure provide a migration method and apparatus for an IAB-node.

According to a first aspect of the embodiments of this disclosure, there is provided a migration apparatus for an IAB-node, applicable to a first IAB-node, the apparatus including: a first receiving unit configured to receive an RRC reconfiguration complete message of terminal equipment and/or a descendant IAB-node served by the first IAB-node; and a first transmitting unit configured to transmit a first uplink message containing the RRC reconfiguration complete message to a target IAB donor node via a target path, or transmit the RRC complete message to a target IAB donor node via a source IAB donor node.

According to a second aspect of the embodiments of this disclosure, there is provided a migration apparatus for an IAB-node, applicable to a first IAB donor node, the first IAB donor node being a source IAB donor node of a first IAB-node, the apparatus including: a fifth receiving unit configured to receive a second uplink message from the first IAB-node, the second uplink message including an RRC reconfiguration complete message of terminal equipment and/or a descendant IAB-node served by the first IAB-node; and a fifth transmitting unit configured to transmit the RRC reconfiguration complete message to a target IAB donor node of the first IAB-node.

According to a third aspect of the embodiments of this disclosure, there is provided a migration apparatus for an IAB-node, applicable to a first IAB donor node, the first IAB donor node being a source IAB donor node of a first IAB-node, the apparatus including: a seventh receiving unit configured to receive a feedback message of a first downlink message including a first RRC reconfiguration message from the first IAB-node; and a seventh transmitting unit configured to transmit a second downlink message to a source parent IAB-node of the first IAB-node, the second downlink message including a second RRC reconfiguration message.

According to a fourth aspect of the embodiments of this disclosure, there is provided a migration apparatus for an IAB-node, applicable to a second IAB donor node, the second IAB donor node being a target IAB donor node of a first IAB-node, the apparatus including: an eighth receiving unit configured to receive a first uplink message including an RRC reconfiguration complete message transmitted by the first IAB-node via a target path; and/or a ninth receiving unit configured to receive an Xn message or NG message including an RRC reconfiguration complete message from a source IAB donor node, the RRC reconfiguration complete message being an RRC reconfiguration complete message of terminal equipment and/or descendant IAB-node served by the first IAB-node.

According to a fifth aspect of the embodiments of this disclosure, there is provided a network device, including the apparatus as described in any one of the first to the fourth aspects of the embodiments of this disclosure.

According to a sixth aspect of the embodiments of this disclosure, there is provided a communication system, including a first network device, a second network device and terminal equipment, the first network device including the apparatus as described in the second or third aspect of the embodiments of this disclosure, and the second network device including the apparatus as described in the fourth aspect of the embodiments of this disclosure.

According to a seventh aspect of the embodiments of this disclosure, there is provided a communication system, including a first network device and terminal equipment, the first network device including the apparatus as described in the second or third or fourth aspect of the embodiments of this disclosure.

According to an eighth aspect of the embodiments of this disclosure, there is provided a communication system, including a first network device, a second network device, a third network device and terminal equipment, the first network device including the apparatus as described in the second or third aspect of the embodiments of this disclosure, the second network device including the apparatus as described in the fourth aspect of the embodiments of this disclosure, and the third network device including the apparatus as described in the first aspect of the embodiments of this disclosure.

According to a ninth aspect of the embodiments of this disclosure, there is provided a communication system, including a first network device, a second network device, a third network device, a fourth network device and terminal equipment, the first network device including the apparatus as described in the second or third aspect of the embodiments of this disclosure, the second network device including the apparatus as described in the fourth aspect of the embodiments of this disclosure, the third network device including the apparatus as described in the first aspect of the embodiments of this disclosure, and the fourth network device being a descendant node of a first IAB-node.

According to a tenth aspect of the embodiments of this disclosure, there is provided a migration method for an IAB-node, applicable to a first IAB-node, the method including: receiving an RRC reconfiguration complete message of terminal equipment and/or a descendant IAB-node served by the first IAB-node; and transmitting a first uplink message containing the RRC reconfiguration complete message to a target IAB donor node via a target path, or transmitting the RRC complete message to a target IAB donor node via a source IAB donor node.

According to an eleventh aspect of the embodiments of this disclosure, there is provided a migration method for an IAB-node, applicable to a first IAB donor node, the first IAB donor node being a source IAB donor node of a first IAB-node, the method including: receiving a second uplink message from the first IAB-node, the second uplink message including an RRC reconfiguration complete message of terminal equipment and/or a descendant IAB-node served by the first IAB-node; and transmitting the RRC reconfiguration complete message to a target IAB donor node of the first IAB-node.

According to a twelfth aspect of the embodiments of this disclosure, there is provided a migration method for an IAB-node, applicable to a first IAB donor node, the first IAB donor node being a source IAB donor node of a first IAB-node, the method including: receiving a feedback message of a first downlink message including a first RRC reconfiguration message from the first IAB-node; and transmitting a second downlink message to a source parent IAB-node of the first IAB-node, the second downlink message including a second RRC reconfiguration message.

According to a thirteenth aspect of the embodiments of this disclosure, there is provided a migration method for an IAB-node, applicable to a second IAB donor node, the second IAB donor node being a target IAB donor node of a first IAB-node, the method including: receiving a first uplink message including an RRC reconfiguration complete message transmitted by the first IAB-node via a target path; and/or receiving an Xn message or NG message including an RRC reconfiguration complete message from a source IAB donor node, the RRC reconfiguration complete message being an RRC reconfiguration complete message of terminal equipment and/or descendant IAB-node served by the first IAB-node.

According to a fourteenth aspect of the embodiments of this disclosure, there is provided a computer readable program code, which, when executed in a migration apparatus for an IAB-node or a network device, will cause the migration apparatus for an IAB-node or the network device to carry out the migration method for an IAB-node as described in the eighth or ninth or tenth aspect of the embodiments of this disclosure.

According to a fifteenth aspect of the embodiments of this disclosure, there is provided a computer readable medium, including a computer readable program code, which will cause a migration apparatus for an IAB-node or a network device to carry out the migration method for an IAB-node as described in the eighth or ninth or tenth aspect of the embodiments of this disclosure.

An advantage of the embodiments of this disclosure exists in that by transmitting the first uplink message containing the RRC reconfiguration complete message to a target IAB donor node via a target path or transmitting the RRC complete message to a target IAB donor node via a source IAB donor node, the target IAB donor node is able to obtain the RRC reconfiguration complete message of the terminal equipment and/or the descendant IAB-node served by the migrating IAB-node, so as to know whether the terminal equipment and/or the descendant IAB-node has/have completed path switching. Therefore, data transmission with the terminal equipment and/or the descendant IAB-node suspended by performing the process of inter-IAB-donor-CU migration or topology adaptation of the IAB-node may be restarted.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprises/comprising/includes/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiments.

The drawings are included to provide further understanding of this disclosure, which constitute a part of the specification and illustrate the preferred embodiments of this disclosure, and are used for setting forth the principles of this disclosure together with the description. It is obvious that the accompanying drawings in the following description are some embodiments of this disclosure, and for those of ordinary skills in the art, other accompanying drawings may be obtained according to these accompanying drawings without making an inventive effort. In the drawings:
FIG. 1 is a schematic diagram of an overall architecture of IAB of an embodiment of this disclosure;
FIG. 2 is another schematic diagram of the overall architecture of the IAB of the embodiment of this disclosure;
FIG. 3 is a schematic diagram of a protocol stack of an F1-U interface between an IAB-DU and an IAB-donor-CU;
FIG. 4 is a schematic diagram of a protocol stack of an F1-C interface between an IAB-DU and an IAB-donor-CU;
FIG. 5 is a schematic diagram of a protocol stack of an SRB between an IAB-MT and an IAB-donor-CU of the embodiment of this disclosure;
FIG. 6 is a schematic diagram of a scenario of migration or topology adaptation of an IAB-node within an IAB-donor-CU of the embodiment of this disclosure;
FIG. 7 is a schematic diagram of a scenario of inter-IAB-donor-CU migration or topology adaptation of an IAB-node of the embodiment of this disclosure;
FIG. 8 is a schematic diagram of the migration method for an IAB-node of embodiment 1 of this disclosure;
FIG. 9 is a schematic diagram of a method for executing step 802 of embodiment 1 of this disclosure;
FIG. 10 is a schematic diagram of a method for executing step 803 of embodiment 1 of this disclosure;
FIG. 11 is a schematic diagram of the migration method for an IAB-node of embodiment 2 of this disclosure;
FIG. 12 is another schematic diagram of the migration method for an IAB-node of embodiment 2 of this disclosure;
FIG. 13 is a schematic diagram of the migration method for an IAB-node of embodiment 3 of this disclosure;
FIG. 14 is a schematic diagram of the migration method for an IAB-node of embodiment 4 of this disclosure;
FIG. 15 is a schematic diagram of the migration method for an IAB-node of embodiment 5 of this disclosure;
FIG. 16 is a schematic diagram of the migration method for an IAB-node of embodiment 6 of this disclosure;
FIG. 17 is a schematic diagram of the migration apparatus for an IAB-node of embodiment 7 of this disclosure;
FIG. 18 is a schematic diagram of the first transmitting unit of embodiment 7 of this disclosure;
FIG. 19 is a schematic diagram of the migration apparatus for an IAB-node of embodiment 8 of this disclosure;
FIG. 20 is another schematic diagram of the migration apparatus for an IAB-node of embodiment 8 of this disclosure;
FIG. 21 is a schematic diagram of the migration apparatus for an IAB-node of embodiment 9 of this disclosure;
FIG. 22 is a block diagram of a systematic structure of the network device of embodiment 10 of this disclosure;
FIG. 23 is a block diagram of a systematic structure of the network device of embodiment 11 of this disclosure;
FIG. 24 is a block diagram of a systematic structure of the network device of embodiment 12 of this disclosure;
FIG. 25 is a schematic diagram of the communication system of embodiment 13 of this disclosure;
FIG. 26 is another schematic diagram of the communication system of embodiment 13 of this disclosure;
FIG. 27 is a further schematic diagram of the communication system of embodiment 13 of this disclosure;
FIG. 28 is still another schematic diagram of the communication system of embodiment 13 of this disclosure;
FIG. 29 is yet another schematic diagram of the communication system of embodiment 13 of this disclosure;
FIG. 30 is yet still another schematic diagram of the communication system of embodiment 13 of this disclosure;
FIG. 31 is further still another schematic diagram of the communication system of embodiment 13 of this disclosure; and
FIG. 32 is yet further another schematic diagram of the communication system of embodiment 13 of this disclosure.

### Detailed Description of the Disclosure

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and high-speed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, and 5G and new radio (NR) in the future, etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices: a node and/or donor in an IAB architecture, a base station (BS), an access point (AP), a transmission reception point (TRP), a broadcast transmitter, a mobile management entity (MME), a gateway, a server, a radio network controller (RNC), a base station controller (BSC), etc.

In the embodiments of this disclosure, the base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" refers to, for example, an equipment accessing to a communication network and receiving network services via a network device, and may also be referred to as "terminal equipment (TE)", such as terminal equipment in an IAB architecture served by an IAB-node or an IAB donor.

The terminal equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a handheld device, a machine-type communication device, a lap-top, a cordless telephone, a smart cell phone, a smart watch, and a digital camera, etc.

For another example, in a scenario of the Internet of Things (IoT), etc., the user equipment may also be a machine or a device performing monitoring or measurement. For example, it may include but not limited to a machine-type communication (MTC) terminal, a vehicle mounted communication terminal, a device to device (D2D) terminal, and a machine to machine (M2M) terminal, etc.

In the embodiments of this disclosure, all of "when... ", "in a case where... ", "for a case where..." and "if..." denote one or some conditions or states, and furthermore, all of these expressions are interchangeable.

Scenarios of the embodiments of this disclosure shall be described below by way of examples; however, this disclosure is not limited thereto.

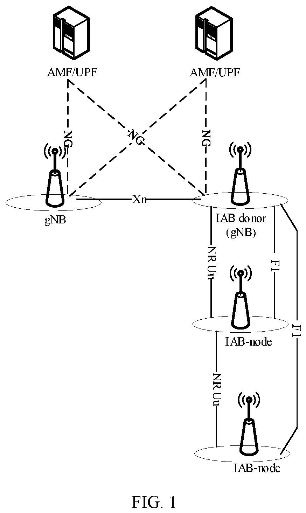

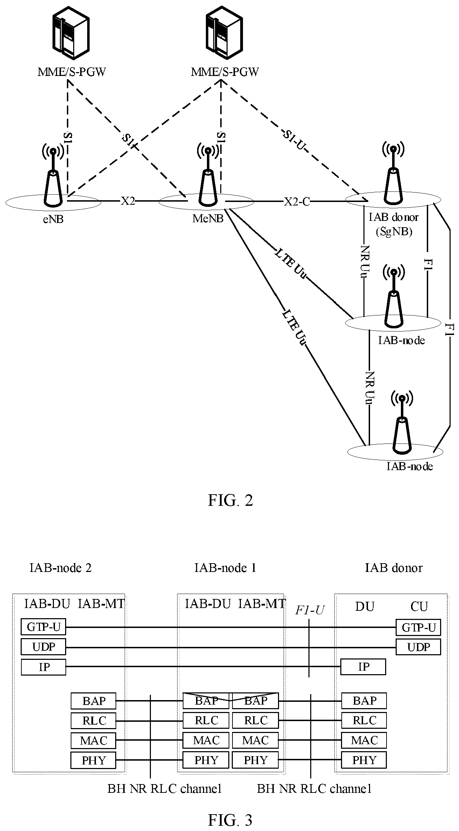

FIG. 1 is a schematic diagram of an overall architecture of an IAB in an embodiment of this disclosure. As shown in FIG. 1, the overall architecture of the IAB is in a duplex (SA) mode. FIG. 2 is another schematic diagram of the overall architecture of the IAB of the embodiment of this disclosure. As shown in FIG. 2, the overall architecture of the IAB is in a dual-connectivity (EN-DC) mode. In the dual-connectivity mode, the IAB-node is connected to an MeNB via E-UTRA, and an IAB donor terminates X2-C as an SgNB.

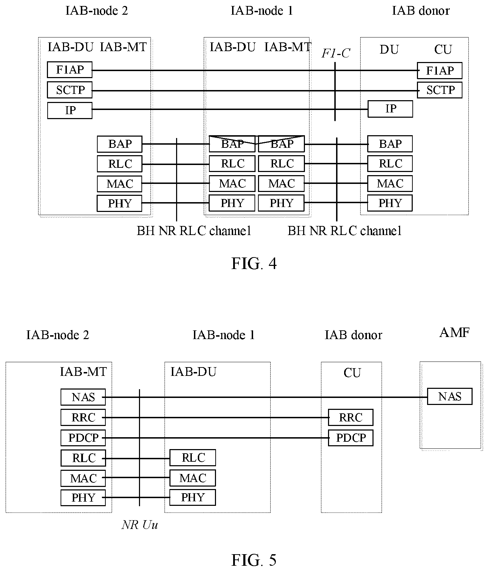

FIG. 3 is a schematic diagram of a protocol stack of an F1-U interface between an IAB-DU and an IAB-donor-CU, and FIG. 4 is a schematic diagram of a protocol stack of an F1-C interface between an IAB-DU and an IAB-donor-CU. In FIG. 3 and FIG. 4, F1-U and F1-C are illustrated by taking 2-hop backhaul as an example.

In the embodiment of this disclosure, F1-U and F1-C use an IP transmission layer between the IAB-DU and IAB-donor-CU. In addition, F1-U and F1-C have security protection.

In the embodiment of this disclosure, the IP layer transmits via a backhaul adaptation protocol (BAP) sublayer on wireless backhaul to ensure multi-hop routing; and the IP layer may also be used for non-F1 services, such as operation administration and maintenance (OAM) services.

In the embodiment of this disclosure, BAP PDUs are transmitted via BH RLC channels on each backhaul link, and on each BH link, multiple BH RLC channels may be configured to allow traffic prioritization and QoS (quality of service) enforcement.

In the embodiment of this disclosure, each IAB-node and a BAP entity on the IAB-donor-DU perform mapping of the BH RLC channels of the BAP PDUs.

In the embodiment of this disclosure, the IAB-MT and IAB-donor-CU establish SRBs for carrying RRC and NAS. FIG. 5 is a schematic diagram of a protocol stack of the SRBs between the IAB-MT and the IAB-donor-CU of the embodiment of this disclosure.

In the embodiment of this disclosure, for the IAB-node operating in the EN-DC mode, the IAB-MT also establishes one or more DRBs with the IAB-donor-CU, which may be used to transmit OAM services, for example. For the SA mode, establishment of DRBs is optional. These SRBs and DRBs are transmitted between the IAB-MT and its parent node via a Uu interface channel.

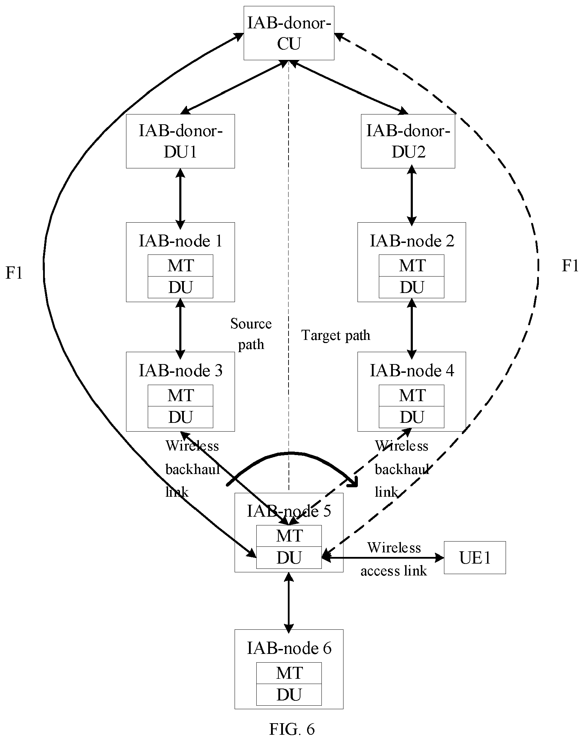

FIG. 6 is a schematic diagram of a scenario of migration or topology adaptation of an IAB-node within an IAB-donor-CU of the embodiment of this disclosure. As shown in FIG. 6, IAB-node 5 is a migrating IAB-node, IAB-node 3 is a source parent IAB-node of IAB-node 5, IAB-node 4 is a target parent IAB-node of IAB-node 5, and IAB-node 3 and IAB-node 4 are connected to identical IAB-donor-CUs and different IAB-donor-DUs. UE1 is terminal equipment served by IAB-node, and IAB-node 6 is a descendant IAB-node served by IAB-node 5.

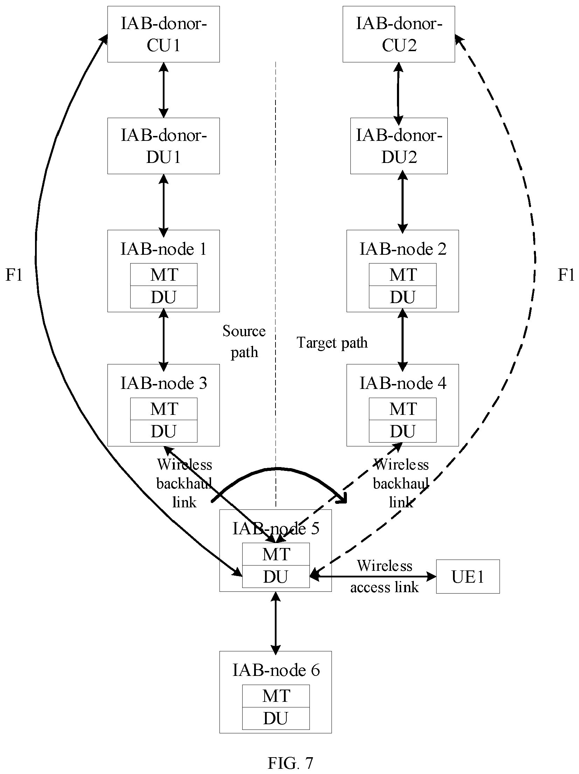

FIG. 7 is a schematic diagram of a scenario of inter-IAB-donor-CU migration or topology adaptation of an IAB-node of the embodiment of this disclosure. As shown in FIG. 7, IAB-node 5 is a migrating node, IAB-node 3 is a source parent IAB-node of IAB-node 5, IAB-node 4 is a target parent IAB-node of IAB-node 5, and IAB-node 3 and IAB-node 4 are connected to different IAB-donor-CUs and different IAB-donor-DUs. UE1 is terminal equipment served by IAB-node 5, and IAB-node 6 is a descendant IAB-node served by IAB-node 5.

For stage (1) in the process of inter-IAB-donor-CU migration or topology adaptation of an IAB-node described above, migrating the IAB-MT of the migrating IAB-node means switching the IAB-MT of IAB-node 5 from the source path to the target path; for stage (2), migrating the IAB-DU in the migrating IAB-node means switching the IAB-DU of IAB-node 5 from IAB-donor-CU1 to IAB-donor-CU2; and for stage (3), migrating the terminal equipment served by the IAB-node and the descendant IAB-nodes served by the IAB-node, i.e. IAB-MTs of the descendant nodes, means switching of IAB-node 6 and UE1.

In order to overcome a defect of traffic suspending resulted from that the terminal equipment performs connection reestablishment after detecting a radio link failure (RLF), it is assumed that stage (3) is executed first, that is, migration of the terminal equipment served by the migrating IAB-node and the descendant IAB-nodes served by the IAB-node, i.e. IAB-MTs of the descendant IAB-nodes, is performed, namely, switching of IAB-node 6 and UE1 is performed first; and use of a signaling process similar to that of switching of IAB-MTs in the migrating IAB-node will bring the following problem: as stage (3) is executed first, that is, there is no F1 connection between IAB-node 5 and IAB-donor-CU2, an RRC reconfiguration complete message transmitted by IAB-node 6 and UE1 to IAB-node 5 may possibly be transferred to IAB-donor-CU1. In other words, IAB-donor-CU2 is unable to learn whether IAB-node 6 and UE1 have completed the switching, and is unable to restart data transmission suspended by performing a process of migration or topology adaptation of IAB-node 5 between IAB-donor-CU1 and IAB-donor-CU2.

Various implementations of the embodiments of this disclosure shall be described below with reference to the accompanying drawings. These implementations are illustrative only, and are not intended to limit this disclosure.

### Embodiment 1

The embodiment of this disclosure provides a migration method for an IAB-node, applicable to a first IAB-node.

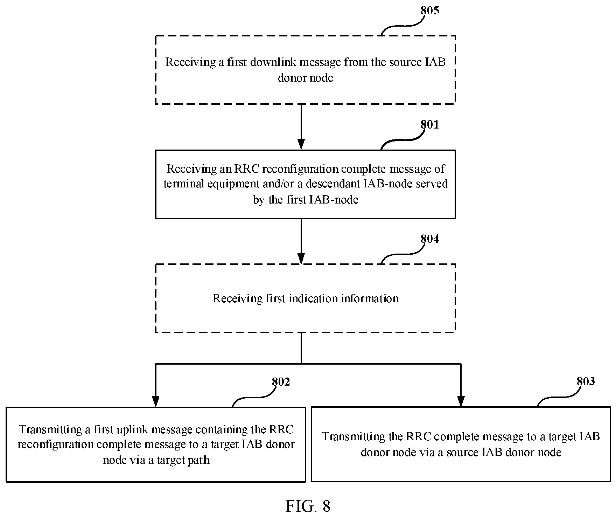

FIG. 8 is a schematic diagram of the migration method for an IAB-node of embodiment 1 of this disclosure. As shown in FIG. 8, the method includes:
step 801: receiving an RRC reconfiguration complete message of terminal equipment and/or a descendant IAB-node served by the first IAB-node; and
step 802: transmitting a first uplink message containing the RRC reconfiguration complete message to a target IAB donor node via a target path; or
step 803: transmitting the RRC complete message to a target IAB donor node via a source IAB donor node.

Therefore, the target IAB donor may obtain the RRC reconfiguration complete message of the terminal equipment and/or the descendant IAB-node served by the migrating IAB-node, so as to know whether the terminal equipment and/or the descendant IAB-node has/have completed path switching. Hence, data transmission between the migrating IAB-node and the terminal equipment and/or the descendant IAB-node suspended by performing a process of inter-IAB-donor-CU migration or topology adaptation of the migrating IAB-node may be restarted.

In the embodiment of this disclosure, the first IAB-node is the migrating IAB-node.

In the embodiment of this disclosure, the terminal equipment served by the first IAB-node may be at least one terminal equipment, and the descendant IAB-node served by the first IAB-node may be at least one descendant node. The terminal equipment and/or descendant IAB-node transmitting the RRC reconfiguration complete message to the first IAB-node may be all terminal equipment and/or all descendant IAB-nodes served by the first IAB-node, or may be some terminal equipment and/or some descendant IAB-nodes served by the first IAB-node.

In the embodiment of this disclosure, the source IAB donor node is also referred to as a source IAB donor, which represents an end point of backhaul of the network side on the source path; and the target IAB donor node is also referred to as a target IAB donor, which represents an end point of backhaul of the network side on the target path.

In step 801, the first IAB-node receives the RRC reconfiguration complete message of the terminal equipment and/or descendant IAB-node served by the first IAB-node, and the RRC reconfiguration complete message is an RRC reconfiguration complete message protected by security configuration (integrity protection and encryption) configured by the target IAB donor node transmitted to the first IAB-node by the terminal equipment and/or descendant IAB-node by using configuration in an RRC reconfiguration message, including security configuration configured by the target IAB donor node, after the terminal equipment and/or descendant IAB-node complete(s) RRC reconfiguration by using the security configuration configured by the target IAB donor node.

In step 802, the first IAB-node transmits a first uplink message containing the RRC reconfiguration complete message to the target IAB donor node via the target path.

In the embodiment of this disclosure, the target path is an F1 interface between a distributed unit (DU) of the first IAB-node and a centralized unit (CU) of the target IAB donor node.

For example, the first uplink message is a first F1 message.

In the embodiment of this disclosure, the F 1 message refers to a control message transmitted via the F1 interface, and the F1 interface refers to an interface between the IAB-DU and the IAB-donor-CU.

In the embodiment of this disclosure, for example, the first F1 message may be at least one of UE context setup response message and UE context modification response message.

For example, the RRC reconfiguration complete message of the terminal equipment corresponding to the terminal equipment context setup response message or the terminal equipment context modification response message is included in the terminal equipment context setup response message or the terminal equipment context modification response message; or,
the terminal equipment context setup response message or the terminal equipment context modification response message includes at least one RRC reconfiguration complete message, and for one RRC reconfiguration complete message in the at least one RRC reconfiguration complete message, terminal equipment transmitting this RRC reconfiguration complete message is identical to or different from terminal equipment associated with the terminal equipment context setup response message or the terminal equipment context modification response message. For example, the terminal equipment context setup response message or the terminal equipment context modification response message includes two RRC reconfiguration complete messages, one of which is from a terminal corresponding to the terminal equipment context setup response message or the terminal equipment context modification response message, and the other RRC reconfiguration complete message is from a terminal that is different from the terminal corresponding to the terminal equipment context setup response message or the terminal equipment context modification response message.

In the embodiment of this disclosure, for another example, the first F1 message is an uplink RRC message transfer message.

For example, all RRC reconfiguration complete messages are included in an uplink RRC message transfer message; or,
all RRC reconfiguration complete messages transmitted by the terminal equipment are included in an uplink RRC message transfer message, and all RRC reconfiguration complete messages transmitted by the IAB descendant node(s) are included in a different uplink RRC message transfer message; or,
RRC reconfiguration complete message(s) transmitted by terminal equipment or IAB descendant node(s) served by an IAB-node are included in one uplink RRC message transfer message, and RRC reconfiguration complete message(s) transmitted by terminal equipment or IAB descendant node served by another IAB-node are included in one different uplink RRC message transfer message; or,
an RRC reconfiguration complete message transmitted by terminal equipment served by an IAB-node is included in one uplink RRC message transfer message, and an RRC reconfiguration complete message transmitted by an IAB descendant node served by the IAB-node is included in one different uplink RRC message transfer message.

In the embodiment of this disclosure, for example, as shown in FIG. 8, the method may further include:
step 804: receiving first indication information,
the first indication information being used to indicate that the RRC reconfiguration complete message is an RRC reconfiguration complete message protected by security configuration configured by the target IAB donor node, or that the RRC reconfiguration complete message is transmitted to the target IAB donor node, or that the first IAB-node stores the RRC reconfiguration complete message.

In the embodiment of this disclosure, step 804 and step 801 may be executed simultaneously or successively, and an order of execution of the two steps is not limited in the embodiment of this disclosure.

For example, when the terminal equipment and/or the descendant IAB-node transmitting the RRC reconfiguration complete message to the first IAB-node transmits the RRC reconfiguration complete message, the first indication information is included at the lower layer and transmitted to the first IAB-node.

In the embodiment of this disclosure, the first indication information is used to indicate RRC messages in the same RLC PDU or MAC PDU.

For example, the first indication information is included in an RLC unit header, or is included in an MAC unit header.

In the embodiment of this disclosure, when the first IAB-node IAB-DU receives the first indication information, in the distributed unit (IAB-DU) of the first IAB-node, an MAC layer or an RLC layer or a BAP layer stores the RRC reconfiguration complete message.

For example, the first IAB-node receives a data packet transmitted by terminal equipment and/or a descendant IAB-node, the MAC layer unpacks and receives the first indication information and a MAC SDU, and the MAC layer stores the MAC SDU; or, the first IAB-node receives a data packet transmitted by terminal equipment and/or a descendant IAB-node, the RLC layer unpacks and receives the first indication information and an RLC SDU, and the RLC layer stores the RLC SDU.

It may further include: storing the RRC reconfiguration complete message by the BAP layer of IAB-MT when the first IAB-node IAB-DU receives the first indication information.

For the case where the first indication information is from the descendant IAB-node served by the first IAB-node, the first indication information may also be included in the BAP unit header, and the BAP layer of the IAB-MT or IAB-DU stores the RRC reconfiguration complete message. Furthermore, it may include delivering the first indication information by the BAP of the IAB-DU of the first IAB-node to the BAP layer of the IAB-MT.

Furthermore, it may include transmitting the first indication information by the MAC layer of the IAB-DU of the first IAB-node to the RLC layer. For example, the first IAB-node receives a data packet transmitted by terminal equipment and/or a descendant IAB-node, the MAC layer unpacks and receives the first indication information and an RLC SDU, the MAC layer delivers the first indication information and the MAC SDU, i.e. the RLC PDU, to the RLC layer, and the RLC layer unpacks and obtains the RLC SDU, and stores the RLC SDU.

It may further include: delivering the first indication information by the MAC layer of the IAB-DU of the first IAB-node to the BAP layer. For example, the first IAB-node receives a data packet transmitted by terminal equipment and/or a descendant IAB-node, the MAC layer unpacks and receives the first indication information and an RLC SDU, the MAC layer delivers the first indication information and the MAC SDU, i.e. the RLC PDU, to the RLC layer, the RLC layer unpacks and receives the RLC SDU and delivers the first indication information and the RLC SDU, i.e. the BAP PDU, to the BAP layer, and the BAP layer unpacks and obtains the BAP SDU, and stores the BAP SDU.

It may further include: delivering the first indication information by the RLC layer of the IAB-DU of the first IAB-node to the BAP layer. For example, the first IAB-node receives a data packet transmitted by terminal equipment and/or a descendant IAB-node, the RLC layer unpacks and receives the first indication information and an RLC SDU and delivers the first indication information and the RLC SDU, i.e. the BAP PDU, to the BAP layer, and the BAP layer unpacks and obtains the BAP SDU, and stores the BAP SDU.

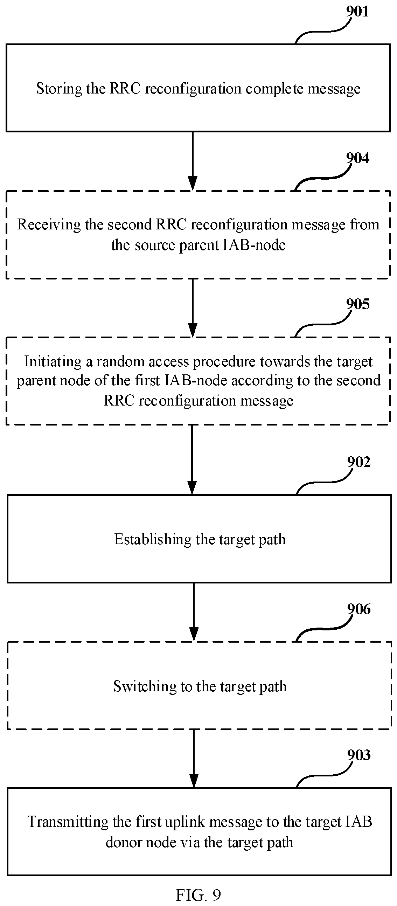

In step 802, the first uplink message containing the RRC reconfiguration complete message is transmitted to the target IAB donor node via the target path. FIG. 9 is a schematic diagram of a method for executing step 802 of embodiment 1 of this disclosure. As shown in FIG. 9, the method includes:
step 901: storing the RRC reconfiguration complete message;
step 902: establishing the target path; and
step 903: transmitting the first uplink message to the target IAB donor node via the target path.

In the embodiment of this disclosure, the RRC message may be invisible to the first IAB-node, that is, the first IAB-node only learns to store one RLC/MAC SDU, and may not learn contents of this RLC/MAC SDU, such as the RRC reconfiguration complete message.

In the embodiment of this disclosure, when the first IAB-node receives the RRC reconfiguration complete message from the terminal equipment and/or descendant IAB-node served by the first IAB-node, it first stores the RRC reconfiguration complete message and establishes the target path, and the first IAB-node transmits the first uplink message containing the RRC reconfiguration complete message to the target IAB donor node via the target path.

In the embodiment of this disclosure, the source IAB donor node transmits a second downlink message to a source parent IAB-node of the first IAB-node. For example, the second downlink message is an F1 message. For example, the second downlink message is a UE context modification request or a DL RRC message transfer message. The second downlink message includes a second RRC reconfiguration message, the second RRC reconfiguration message being from the target IAB donor. After receiving the second downlink message, the source parent IAB-node of the first IAB-node transmits the second RRC reconfiguration message to the first IAB-node.

As shown in FIG. 9, for example, the method may further include:
step 904: receiving the second RRC reconfiguration message from the source parent IAB-node;
step 905: initiating a random access procedure towards the target parent node of the first IAB-node according to the second RRC reconfiguration message; and
step 906: switching to the target path.

In the embodiment of this disclosure, based on an indication in the second downlink message, the source parent IAB-node may suspend traffics with the first IAB-node, so that traffics of the terminal equipment and/or the descendant IAB-node served by the first IAB-node will also be suspended.

In the embodiment of this disclosure, the first IAB-node may control suspending of traffics with the terminal equipment and/or the descendant IAB-node served by it.

For example, the first IAB-node stores the second RRC reconfiguration message received from the source parent IAB-node, and continues to perform service transmission with the terminal equipment and/or the descendant IAB-node served by the first IAB-node, until traffics with the terminal equipment and/or the descendant IAB-node are suspended based on an indication or based on implementation or based on a timer or based on a quantity and/or proportion. In this way, suspending of the traffics with the terminal equipment and/or descendant IAB-node served by the first IAB-node may be reduced.

In the embodiment of this disclosure, for example, the first IAB-node suspends the traffics with the terminal equipment and/or the descendant IAB-node when a first condition is satisfied.

For example, the first condition may include at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a first timer expires;
the number of terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio; and
the number of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio.

Various cases shall be illustrated below.
1) The first IAB-node may suspend traffics with the terminal equipment and/or the descendant IAB-node based on an indication, such as suspending based on implementation. For example, when RRC reconfiguration messages are transmitted to all terminal equipment and/or descendant IAB-nodes served by the first IAB-node or RRC reconfiguration complete message from most terminal equipment and/or descendant IAB-nodes are received, traffics with the terminal equipment and/or descendant IAB-nodes are suspended, and a random access procedure towards the target parent IAB-node is initiated by applying new configuration in previously stored second RRC reconfiguration message from the source parent IAB-node.

For example, when the RRC reconfiguration messages are transmitted to all the terminal equipment served by the first IAB-node or the RRC reconfiguration complete messages are received from most terminal equipment, traffics with all these terminal equipment or those terminal equipment from which the RRC reconfiguration complete messages are received are suspended.

For another example, when the RRC reconfiguration messages are transmitted to all the descendant IAB-nodes served by the first IAB-node or the RRC reconfiguration complete messages are received from most descendant IAB-nodes, traffics with all these descendant IAB-nodes or those descendant IAB-nodes from which the RRC reconfiguration complete messages are received are suspended.

For a further example, when the RRC reconfiguration messages are transmitted to all the terminal equipment and all the descendant IAB-nodes served by the first IAB-node or the RRC reconfiguration complete messages are received from most terminal equipment and descendant IAB-nodes, traffics with all these terminal equipment and descendant IAB-nodes are suspended or traffics with those terminal equipment and descendant IAB-nodes from which the RRC reconfiguration complete messages are received are suspended.

2) The first IAB-node may suspend the traffic with the terminal equipment and/or the descendant IAB-node based on a timer. For example, when a first timer expires, the traffic with the terminal equipment and/or the descendant IAB-node is suspended, and a random access procedure towards the target parent IAB-node is initiated by applying previously stored second RRC reconfiguration message from the source parent IAB-node. For example, it may be that the first timer is started immediately when the first IAB-node receives a value of the first timer, or it may be that the first timer is started after receiving a value of the first timer and receiving the second RRC reconfiguration message from the target IAB donor node transferred by the source parent IAB-node.

For example, when the first timer expires, the traffic with the served terminal equipment is suspended.

For another example, when the first timer expires, the traffic with the served descendant IAB-node is suspended.

For a further example, when the first timer expires, the traffics with the served terminal equipment and the descendant IAB-node are suspended.

3) The first IAB-node may suspend the traffics with terminal equipment and/or the descendant IAB-nodes based on the number and/or ratio of the terminal equipment and/or the descendant IAB-nodes, or the number and/or ratio of transmitted messages, or the number and/or ratio of received messages or feedback, for example,
when the number of terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio, the first IAB-node suspends traffics with all these terminal equipment and/or descendant IAB-nodes, or suspends traffics with the terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages, that is, traffics with the terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages are suspended based the number and/or ratio of these terminal equipment and/or descendant IAB-nodes.

Or, when the number of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio, the first IAB-node suspends traffics with the terminal equipment and/or descendant IAB-node, that is, traffics with the terminal equipment and/or the descendant IAB-node are suspended based on the number and/or ratio of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node.

For example, when the number of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the first configuration value, and/or when the ratio of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the first ratio, the first IAB-node suspends the traffics with all these terminal equipment or suspends the traffics with these terminal equipment to which the RRC reconfiguration messages are transmitted or from which the feedback of the RRC reconfiguration messages is received; or, when the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the second configuration value, and/or, when the ratio of the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the second ratio, the first IAB-node suspends the traffics with all these terminal equipment or suspends the traffics with these terminal equipment to which the RRC reconfiguration messages are transmitted or from which the feedback of the RRC reconfiguration messages is received.

For another example, when the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first configuration value, and/or when the ratio of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first ratio, the first IAB-node suspends the traffics with all these descendant IAB-nodes or suspends the traffics with these descendant IAB-nodes to which the RRC reconfiguration messages are transmitted or from which the feedback of the RRC reconfiguration messages is received; or, when the number of the RRC reconfiguration messages transmitted by the first IAB-node to the descendant IAB-node served by the first IAB-node or the number of the feedback of the RRC reconfiguration messages received from the descendant IAB-node served by the first IAB-node or the number of RRC reconfiguration complete messages received from the descendant IAB-node served by the first IAB-node reaches the second configuration value, and/or, when the ratio of the number of the RRC reconfiguration messages transmitted by the first IAB-node to the descendant IAB-node served by the first IAB-node or the number of the feedback of the RRC reconfiguration messages received from the descendant IAB-node served by the first IAB-node or the number of RRC reconfiguration complete messages received from the descendant IAB-node served by the first IAB-node reaches the second ratio, the first IAB-node suspends the traffics with all these descendant IAB-nodes or suspends the traffics with these descendant IAB-nodes to which the RRC reconfiguration message are transmitted or from which the feedback of the RRC reconfiguration messages is received.

For a further example, when the number of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first configuration value, and/or when the ratio of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first ratio, the first IAB-node suspends the traffics with all these terminal equipment and descendant IAB-nodes or suspends the traffics with these terminal equipment and descendant IAB-nodes to which the RRC reconfiguration messages are transmitted or from which the feedback of the RRC reconfiguration messages is received; or, when the number of the RRC reconfiguration messages transmitted by the first IAB-node to the terminal equipment and descendant IAB-nodes served by the first IAB-node or the number of the feedback of the RRC reconfiguration messages received from the terminal equipment and descendant IAB-nodes served by the first IAB-node or the number of RRC reconfiguration complete messages received from the terminal equipment and descendant IAB-nodes served by the first IAB-node reaches the second configuration value, and/or, when the ratio of the number of the RRC reconfiguration messages transmitted by the first IAB-node to the terminal equipment and descendant IAB-nodes served by the first IAB-node or the number of the feedback of the RRC reconfiguration messages received from the terminal equipment and descendant IAB-nodes served by the first IAB-node or the number of RRC reconfiguration complete messages received from the terminal equipment and descendant IAB-nodes served by the first IAB-node reaches the second ratio, the first IAB-node suspends the traffics with all these terminal equipment and descendant IAB-nodes or suspends the traffics with these terminal equipment and descendant IAB-nodes to which the RRC reconfiguration message are transmitted or from which the feedback of the RRC reconfiguration messages is received.

For still another example, when the number of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the first configuration value, and/or when the ratio of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the first ratio, the first IAB-node suspends the traffics with all these terminal equipment and descendant IAB-nodes or suspends the traffics with those terminal equipment and all descendant IAB-nodes to which the RRC reconfiguration messages are transmitted or from which the feedback of the RRC reconfiguration messages is received; or, when the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the second configuration value, and/or, when the ratio of the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the second ratio, the first IAB-node suspends the traffics with all these terminal equipment and descendant IAB-nodes or suspends the traffics with those terminal equipment and descendant IAB-nodes to which the RRC reconfiguration messages are transmitted or from which the feedback of the RRC reconfiguration messages is received.

For yet another example, when the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first configuration value, and/or when the ratio of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the first ratio, the first IAB-node suspends the traffics with all these terminal equipment and descendant IAB-nodes or suspends the traffics with all terminal equipment and descendant IAB-nodes to which the RRC reconfiguration messages are transmitted or from which the feedback of the RRC reconfiguration messages is received; or, when the number of the RRC reconfiguration messages transmitted by the first IAB-node to the descendant IAB-nodes served by the first IAB-node or the number of the feedback of the RRC reconfiguration messages received from the descendant IAB-nodes served by the first IAB-node or the number of RRC reconfiguration complete messages received from the descendant IAB-nodes served by the first IAB-node reaches the second configuration value, and/or, when the ratio of the number of the RRC reconfiguration messages transmitted by the first IAB-node to the descendant IAB-nodes served by the first IAB-node or the number of the feedback of the RRC reconfiguration messages received from the descendant IAB-nodes served by the first IAB-node or the number of RRC reconfiguration complete messages received from the descendant IAB-nodes served by the first IAB-node reaches the second ratio, the first IAB-node suspends the traffics with all these terminal equipment and descendant IAB-nodes or suspends the traffics with all terminal equipment and the descendant IAB-nodes to which the RRC reconfiguration message are transmitted or from which the feedback of the RRC reconfiguration messages is received.

In the embodiment of this disclosure, the ratio of the terminal equipment and/or descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment and/or descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of terminal equipment and/or descendant IAB-nodes served by the first IAB-node.

For example, the ratio of the terminal equipment to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment to which the first IAB-node transmits the RRC reconfiguration messages or from which the first IAB-node receives the feedback of the RRC reconfiguration messages or from which the first IAB-node receives the RRC reconfiguration complete messages to the total number of terminal equipment and/or descendant IAB-nodes served by the first IAB-node.

For example, the ratio of the descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of descendant IAB-nodes served by the first IAB-node.

For example, the ratio of the terminal equipment and descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of terminal equipment and descendant IAB-nodes served by the first IAB-node.

In the embodiment of this disclosure, the ratio of the RRC reconfiguration messages transmitted by the first IAB-node to the terminal equipment and/or the descendant IAB-node served by the first IAB-node or the ratio of feedback of the RRC reconfiguration messages from the terminal equipment and/or the descendant IAB-node served by the first IAB-node or the ratio of the RRC reconfiguration complete messages received from the terminal equipment and/or the descendant IAB-node served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages from the terminal equipment and/or the descendant IAB-node served by the first IAB-node or the RRC reconfiguration complete messages received from the terminal equipment and/or the descendant IAB-node served by the first IAB-node to the number of the RRC reconfiguration messages transmitted by the first IAB-node.

For example, in the embodiment of this disclosure, the ratio of the RRC reconfiguration messages transmitted by the first IAB-node to the terminal equipment and/or the descendant IAB-node served by the first IAB-node or the feedback of the RRC reconfiguration messages from the terminal equipment and/or the descendant IAB-node served by the first IAB-node or the RRC reconfiguration complete messages received from the terminal equipment and/or the descendant IAB-node served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages received from the terminal equipment and/or the descendant IAB-node served by the first IAB-node or the RRC reconfiguration complete messages received from the terminal equipment and/or the descendant IAB-node served by the first IAB-node to the number of the RRC reconfiguration messages transmitted by the first IAB-node.

For example, in the embodiment of this disclosure, the ratio of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node refers to: a ratio of the number of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node to the number of the RRC reconfiguration messages transmitted by the first IAB-node.

For example, the ratio of the RRC reconfiguration messages transmitted by the first IAB-node to the terminal equipment and the descendant IAB-node served by the first IAB-node or the feedback of the RRC reconfiguration messages received from the terminal equipment and the descendant IAB-node served by the first IAB-node or the RRC reconfiguration complete messages received from the terminal equipment and the descendant IAB-node served by the first IAB-node refers to: a ratio of the number of the RRC reconfiguration messages transmitted by the first IAB-node to the terminal equipment and the descendant IAB-node served by the first IAB-node or the feedback of the RRC reconfiguration messages received from the terminal equipment and the descendant IAB-node served by the first IAB-node or the RRC reconfiguration complete messages received from the terminal equipment and the descendant IAB-node served by the first IAB-node to the number of the RRC reconfiguration messages transmitted by the first IAB-node.

The case where the first IAB-node controls the suspending of the traffics with the terminal equipment and/or the descendant IAB-node served thereby is illustrated above. For such a case, the first IAB-node stores the received RRC reconfiguration complete messages from the terminal equipment and/or descendant IAB-node served thereby, transmits the first uplink message including the RRC reconfiguration complete messages to the target IAB-donor-CU via the target path to complete inter-IAB-donor-CU migration or switching or topology adaptation of the terminal equipment and/or descendant IAB-node, thereby enabling the target IAB-donor-CU to restart the suspended data transmission with the terminal equipment and/or the descendant IAB-node. In addition, this method has less restrictions on signaling flow of the switching or migration or topology adaptation of the IAB-MT and IAB-DU of the migrating IAB-node and the terminal equipment and/or descendant IAB-node served by the migrating IAB-node during the process of inter-IAB-donor-CU migration or topology adaptation of the IAB-node, thereby ensuring a more flexible process of inter-IAB-donor-CU migration or topology adaptation of the IAB-node.

In the embodiment of this disclosure, the source IAB donor node may also control the suspending of the traffics with the first IAB-node and the terminal equipment and/or descendant IAB-node served thereby.

For example, after the source IAB donor node receives switching feedback from the target IAB donor node, the source IAB donor node first transmits the first downlink message including a first RRC reconfiguration message to the first IAB-node, the first RRC reconfiguration message being from the target IAB donor; and after receiving feedback message of the first downlink message from the first IAB-node, the source IAB donor node transmits a second downlink message including a second RRC reconfiguration message to the source parent IAB-node of the first IAB-node. After receiving the second downlink message, the source parent IAB-node of the first IAB-node transmits the second RRC reconfiguration message to the first IAB-node. After receiving the second RRC reconfiguration message, the first IAB-node suspends the traffics the terminal equipment and/or the descendant IAB-node served thereby.

In the embodiment of this disclosure, after the first IAB-node receives the first downlink message including the first RRC reconfiguration message transmitted by the source IAB donor node, the first IAB-node may transmit feedback message of the first downlink message to the source IAB donor node based on an indication or based on implementation or based on a timer or based on a number and/or a proportion.

For example, when a second condition is satisfied, the first IAB-node transmits the feedback message of the first downlink message to the source IAB donor node.

For example, the second condition may include at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a second timer expires;
the number of terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages of the RRC reconfiguration messages or from which the first IAB-node receives the RRC reconfiguration complete messages reaches a third ratio; and
the number of the RRC reconfiguration messages transmitted by the first IAB-node to the terminal equipment and/or the descendant IAB-node served by the first IAB-node or the number of received feedback of the RRC reconfiguration messages of the RRC reconfiguration messages of the terminal equipment and/or the descendant IAB-node served by the first IAB-node or the number of the received RRC reconfiguration complete messages of the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of received feedback of the RRC reconfiguration messages of the terminal equipment and/or the descendant IAB-node served by the first IAB-node or a ratio of the received RRC reconfiguration complete messages of the terminal equipment and/or the descendant IAB-node served by the first IAB-node reaches a fourth ratio.

Various cases shall be illustrated below.
1) The first IAB-node may suspend traffics with the terminal equipment and/or the descendant IAB-node based on an indication, such as suspending based on implementation. For example, when RRC reconfiguration messages are transmitted to all terminal equipment and/or descendant IAB-nodes served by the first IAB-node or RRC reconfiguration complete message from most terminal equipment and/or descendant IAB-nodes are received, traffics with the terminal equipment and/or descendant IAB-nodes are suspended, and a random access procedure towards the target parent IAB-node is initiated by applying new configuration in previously stored second RRC reconfiguration message from the source parent IAB-node.

For example, when the RRC reconfiguration messages are transmitted to all the terminal equipment served by the first IAB-node or the RRC reconfiguration complete messages are received from most terminal equipment, traffics with all these terminal equipment or those terminal equipment from which the RRC reconfiguration complete messages are received are suspended.

For another example, when the RRC reconfiguration messages are transmitted to all the descendant IAB-nodes served by the first IAB-node or the RRC reconfiguration complete messages are received from most descendant IAB-nodes, traffics with all these descendant IAB-nodes or those descendant IAB-nodes from which the RRC reconfiguration complete messages are received are suspended.

For a further example, when the RRC reconfiguration messages are transmitted to all the terminal equipment and all the descendant IAB-nodes served by the first IAB-node or the RRC reconfiguration complete messages are received from most terminal equipment and descendant IAB-nodes, traffics with all these terminal equipment and descendant IAB-nodes are suspended or traffics with those terminal equipment and descendant IAB-nodes from which the RRC reconfiguration complete messages are received are suspended.

2) The first IAB-node may suspend the traffic with the terminal equipment and/or the descendant IAB-node based on a timer. For example, when a second timer expires, the traffic with the terminal equipment and/or the descendant IAB-node is suspended, and a random access procedure towards the target parent IAB-node is initiated by applying previously stored second RRC reconfiguration message from the source parent IAB-node. For example, it may be that the second timer is started immediately when the first IAB-node receives a value of the second timer, or it may be that the second timer is started after receiving a value of the second timer and receiving the second RRC reconfiguration message from the target IAB donor node transferred by the source parent IAB-node.

For example, when the second timer expires, the traffic with the served terminal equipment is suspended.

For another example, when the second timer expires, the traffic with the served descendant IAB-node is suspended.

For a further example, when the second timer expires, the traffics with the served terminal equipment and the descendant IAB-node are suspended.

3) The first IAB-node may suspend the traffics with terminal equipment and/or the descendant IAB-nodes based on the number and/or ratio of the terminal equipment and/or the descendant IAB-nodes, or the number and/or ratio of transmitted messages, or the number and/or ratio of received messages or feedback, for example,
when the number of terminal equipment and/or descendant IAB-nodes to which the first IAB-node transmits the RRC reconfiguration messages or from which the first IAB-node receives feedback messages of the RRC reconfiguration messages or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a third ratio, the first IAB-node suspends traffics with all these terminal equipment and/or descendant IAB-nodes, or suspends traffics with the terminal equipment and/or descendant IAB-nodes to which the first IAB-node transmits the RRC reconfiguration messages or from which the first IAB-node receives feedback messages of the RRC reconfiguration messages, that is, traffics with the terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages are suspended based the number and/or ratio of these terminal equipment and/or descendant IAB-nodes.

Or, when the number of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the number of the RRC reconfiguration complete messages received from the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a fourth ratio, the first IAB-node suspends traffics with the terminal equipment and/or descendant IAB-node, that is, traffics with the terminal equipment and/or the descendant IAB-node are suspended based on the number and/or ratio of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the received RRC reconfiguration complete messages from the terminal equipment and/or the descendant IAB-node.

For example, when the number of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the third configuration value, and/or when the ratio of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the third ratio, the first IAB-node suspends the traffics with all these terminal equipment or suspends the traffics with these terminal equipment to which the RRC reconfiguration messages are transmitted or from which the feedback of the RRC reconfiguration messages is received; or, when the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the fourth configuration value, and/or, when the ratio of the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the fourth ratio, the first IAB-node suspends the traffics with all these terminal equipment or suspends the traffics with these terminal equipment to which the RRC reconfiguration messages are transmitted or from which the feedback of the RRC reconfiguration messages is received.

For another example, when the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third configuration value, and/or when the ratio of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third ratio, the first IAB-node suspends the traffics with all these descendant IAB-nodes or suspends the traffics with these descendant IAB-nodes to which the RRC reconfiguration messages are transmitted or from which the feedback of the RRC reconfiguration messages is received; or, when the number of the RRC reconfiguration messages transmitted by the first IAB-node to the descendant IAB-node served by the first IAB-node or the number of the feedback of the RRC reconfiguration messages received from the descendant IAB-node served by the first IAB-node or the number of RRC reconfiguration complete messages received from the descendant IAB-node served by the first IAB-node reaches the fourth configuration value, and/or, when the ratio of the number of the RRC reconfiguration messages transmitted by the first IAB-node to the descendant IAB-node served by the first IAB-node or the number of the feedback of the RRC reconfiguration messages received from the descendant IAB-node served by the first IAB-node or the number of RRC reconfiguration complete messages received from the descendant IAB-node served by the first IAB-node reaches the fourth ratio, the first IAB-node suspends the traffics with all these descendant IAB-nodes or suspends the traffics with these descendant IAB-nodes to which the RRC reconfiguration message are transmitted or from which the feedback of the RRC reconfiguration messages is received.

For a further example, when the number of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third configuration value, and/or when the ratio of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third ratio, the first IAB-node suspends the traffics with all these terminal equipment and descendant IAB-nodes or suspends the traffics with these terminal equipment and descendant IAB-nodes to which the RRC reconfiguration messages are transmitted or from which the feedback of the RRC reconfiguration messages is received; or, when the number of the RRC reconfiguration messages transmitted by the first IAB-node to the terminal equipment and descendant IAB-nodes served by the first IAB-node or the number of the feedback of the RRC reconfiguration messages received from the terminal equipment and descendant IAB-nodes served by the first IAB-node or the number of RRC reconfiguration complete messages received from the terminal equipment and descendant IAB-nodes served by the first IAB-node reaches the fourth configuration value, and/or, when the ratio of the number of the RRC reconfiguration messages transmitted by the first IAB-node to the terminal equipment and descendant IAB-nodes served by the first IAB-node or the number of the feedback of the RRC reconfiguration messages received from the terminal equipment and descendant IAB-nodes served by the first IAB-node or the number of RRC reconfiguration complete messages received from the terminal equipment and descendant IAB-nodes served by the first IAB-node reaches the fourth ratio, the first IAB-node suspends the traffics with all these terminal equipment and descendant IAB-nodes or suspends the traffics with these terminal equipment and descendant IAB-nodes to which the RRC reconfiguration message are transmitted or from which the feedback of the RRC reconfiguration messages is received.

For still another example, when the number of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the third configuration value, and/or when the ratio of the terminal equipment to which the first IAB-node transmits the RRC reconfiguration messages or from which the first IAB-node receives the feedback of the RRC reconfiguration messages or from which the first IAB-node receives the RRC reconfiguration complete messages reaches the third ratio, the first IAB-node suspends the traffics with all these terminal equipment and descendant IAB-nodes or suspends the traffics with those terminal equipment and all descendant IAB-nodes to which the RRC reconfiguration messages are transmitted or from which the feedback of the RRC reconfiguration messages is received; or, when the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the fourth configuration value, and/or, when the ratio of the number of the RRC reconfiguration messages transmitted by the first IAB-node to the terminal equipment served by the first IAB-node or the number of the feedback of the RRC reconfiguration messages received from the terminal equipment served by the first IAB-node or the number of RRC reconfiguration complete messages received from the terminal equipment served by the first IAB-node reaches the fourth ratio, the first IAB-node suspends the traffics with all these terminal equipment and descendant IAB-nodes or suspends the traffics with those terminal equipment and descendant IAB-nodes to which the RRC reconfiguration messages are transmitted or from which the feedback of the RRC reconfiguration messages is received.

For yet another example, when the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third configuration value, and/or when the ratio of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages reaches the third ratio, the first IAB-node suspends the traffics with all these terminal equipment and descendant IAB-nodes or suspends the traffics with all terminal equipment and descendant IAB-nodes to which the RRC reconfiguration messages are transmitted or from which the feedback of the RRC reconfiguration messages is received; or, when the number of the RRC reconfiguration messages transmitted by the first IAB-node to the descendant IAB-nodes served by the first IAB-node or the number of the feedback of the RRC reconfiguration messages received from the descendant IAB-nodes served by the first IAB-node or the number of RRC reconfiguration complete messages received from the descendant IAB-nodes served by the first IAB-node reaches the fourth configuration value, and/or, when the ratio of the number of the RRC reconfiguration messages transmitted by the first IAB-node to the descendant IAB-nodes served by the first IAB-node or the number of the feedback of the RRC reconfiguration messages received from the descendant IAB-nodes served by the first IAB-node or the number of RRC reconfiguration complete messages received from the descendant IAB-nodes served by the first IAB-node reaches the fourth ratio, the first IAB-node suspends the traffics with all these terminal equipment and descendant IAB-nodes or suspends the traffics with all terminal equipment and the descendant IAB-nodes to which the RRC reconfiguration message are transmitted or from which the feedback of the RRC reconfiguration messages is received.

In the embodiment of this disclosure, the ratio of the terminal equipment and/or descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment and/or descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of terminal equipment and/or descendant IAB-nodes served by the first IAB-node.

For example, the ratio of the terminal equipment to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment to which the first IAB-node transmits the RRC reconfiguration messages or from which the first IAB-node receives the feedback of the RRC reconfiguration messages or from which the first IAB-node receives the RRC reconfiguration complete messages to the total number of terminal equipment and/or descendant IAB-nodes served by the first IAB-node.

For example, the ratio of the descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of descendant IAB-nodes served by the first IAB-node.

For example, the ratio of the terminal equipment and descendant IAB-nodes to which the first IAB-node transmits the RRC reconfiguration messages or from which the first IAB-node receives the feedback of the RRC reconfiguration message or from which the first IAB-node receives the RRC reconfiguration complete message refers to: a ratio of the number of the terminal equipment and descendant IAB-nodes to which the first IAB-node transmits the RRC reconfiguration messages or from which the first IAB-node receives the feedback of the RRC reconfiguration messages or from which the first IAB-node receives the RRC reconfiguration complete messages to a total number of terminal equipment and descendant IAB-nodes served by the first IAB-node.

In the embodiment of this disclosure, the ratio of the RRC reconfiguration messages transmitted by the first IAB-node to the terminal equipment and/or the descendant IAB-node served by the first IAB-node or the feedback of the RRC reconfiguration messages received from the terminal equipment and/or the descendant IAB-node served by the first IAB-node or the RRC reconfiguration complete messages received from the terminal equipment and/or the descendant IAB-node served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages from the terminal equipment and/or the descendant IAB-node served by the first IAB-node or the RRC reconfiguration complete messages received from the terminal equipment and/or the descendant IAB-node served by the first IAB-node to the number of the RRC reconfiguration messages transmitted by the first IAB-node.

For example, in the embodiment of this disclosure, the ratio of the RRC reconfiguration messages transmitted by the first IAB-node to the terminal equipment and/or the descendant IAB-node served by the first IAB-node or the feedback of the RRC reconfiguration messages from the terminal equipment and/or the descendant IAB-node served by the first IAB-node or the RRC reconfiguration complete messages received from the terminal equipment and/or the descendant IAB-node served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages received from the terminal equipment and/or the descendant IAB-node served by the first IAB-node or the RRC reconfiguration complete messages received from the terminal equipment and/or the descendant IAB-node served by the first IAB-node to the number of the RRC reconfiguration messages transmitted by the first IAB-node.

For example, in the embodiment of this disclosure, the ratio of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node refers to: a ratio of the number of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node to the number of the RRC reconfiguration messages transmitted by the first IAB-node.

For example, the ratio of the RRC reconfiguration messages transmitted by the first IAB-node to the terminal equipment and the descendant IAB-node served by the first IAB-node or the feedback of the RRC reconfiguration messages received from the terminal equipment and the descendant IAB-node served by the first IAB-node or the RRC reconfiguration complete messages received from the terminal equipment and the descendant IAB-node served by the first IAB-node refers to: a ratio of the number of the RRC reconfiguration messages transmitted by the first IAB-node to the terminal equipment and the descendant IAB-node served by the first IAB-node or the feedback of the RRC reconfiguration messages received from the terminal equipment and the descendant IAB-node served by the first IAB-node or the RRC reconfiguration complete messages received from the terminal equipment and the descendant IAB-node served by the first IAB-node to the number of the RRC reconfiguration messages transmitted by the first IAB-node.

In the embodiment of this disclosure, the ratio of the RRC reconfiguration messages transmitted by the first IAB-node to the terminal equipment and/or the descendant IAB-node served by the first IAB-node or the feedback of the RRC reconfiguration messages received from the terminal equipment and/or the descendant IAB-node served by the first IAB-node or the RRC reconfiguration complete messages received from the terminal equipment and/or the descendant IAB-node served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages received from the terminal equipment and/or the descendant IAB-node served by the first IAB-node or the RRC reconfiguration complete messages received from the terminal equipment and/or the descendant IAB-node served by the first IAB-node to the number of the RRC reconfiguration messages transmitted by the first IAB-node.

For example, in the embodiment of this disclosure, the ratio of the RRC reconfiguration messages transmitted by the first IAB-node to the terminal equipment and/or the descendant IAB-node served by the first IAB-node or the feedback of the RRC reconfiguration messages received from the terminal equipment served by the first IAB-node or the RRC reconfiguration complete messages received from the terminal equipment served by the first IAB-node refers to: a ratio of the number of the RRC reconfiguration messages transmitted by the first IAB-node to the terminal equipment and/or the descendant IAB-node served by the first IAB-node or the feedback of the RRC reconfiguration messages received from the terminal equipment served by the first IAB-node or the RRC reconfiguration complete messages received from the terminal equipment served by the first IAB-node to the number of the RRC reconfiguration messages transmitted by the first IAB-node.

For example, in the embodiment of this disclosure, the ratio of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node refers to: a ratio of the number of the RRC reconfiguration messages transmitted by the first IAB-node to the descendant IAB-node of the first IAB-node or the feedback of the RRC reconfiguration messages received from the descendant IAB-node of the first IAB-node or the RRC reconfiguration complete messages received from the descendant IAB-node of the first IAB-node to the number of the RRC reconfiguration messages transmitted by the first IAB-node.

The case where the source IAB donor node controls the suspending of the traffics with the terminal equipment and/or the descendant IAB-node served by the migrating IAB-node is illustrated above. For such a case, the first IAB-node stores the received RRC reconfiguration complete messages from the terminal equipment and/or descendant IAB-node served thereby, transmits the first uplink message including the RRC reconfiguration complete messages to the target IAB-donor-CU via the target path to complete inter-IAB-donor-CU migration or switching or topology adaptation of the terminal equipment and/or descendant IAB-node, thereby enabling the target IAB-donor-CU to restart the suspended data transmission with the terminal equipment and/or the descendant IAB-node. In addition, this method reduces suspending of the traffics of the first IAB-node with the terminal equipment and/or descendant IAB-node served thereby by controlling an order of execution of the switching or migration or topology adaptation of the IAB-MT and IAB-DU of the first IAB-node and the terminal equipment and/or descendant IAB-node served by the first IAB-node during the process of inter-IAB-donor-CU migration or topology adaptation of the IAB-node, thereby reducing suspending of the traffics of the first IAB-node with the terminal equipment served thereby and the terminal equipment served by the descendant IAB-node.

In the embodiment of this disclosure, before step 801, as shown in FIG. 8, for example, the method may further include:
step 805: receiving a first downlink message from the source IAB donor node,
the first downlink message including a first RRC reconfiguration message, the first RRC reconfiguration message including a key configured by the target IAB donor node. For example, after receiving switching feedback of the target IAB donor node, the source IAB donor node first transmits the first downlink message including the first RRC reconfiguration message.

In the embodiment of this disclosure, for example, the first downlink message is a second F1 message.

For example, the first downlink message includes at least one of the following:
second indication information used for indicating that inter-CU IAB-node migration is to be performed, or indicating terminal equipment configuration performed for inter-CU IAB-node migration;
for example, the second indication information is the "indication" based upon which the first IAB-node suspends the traffics with the terminal equipment and/or the descendant IAB-node in the above first condition or second condition;
a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
the number and/or a ratio of at least one of terminal equipment, descendant IAB-node, message(s) and feedback(s).

In the embodiment of this disclosure, the feedback of the first RRC reconfiguration message is, for example, a UE context modification response message or an uplink RRC message transfer message.

In the embodiment of this disclosure, reference may be made to the contents in the above first condition and second condition for the number and/or ratio of at least one of the terminal equipment, the descendant IAB-node, the messages and the feedback.

For example, the number of the terminal equipment refers to the first configuration value or the second configuration value described above, and the ratio of the terminal equipment refers to the first ratio or the second ratio described above, or the number of the terminal equipment refers to the third configuration value or fourth configuration value described above, and the ratio of the terminal equipment refers to the third ratio or the fourth ratio described above.

In the embodiment of this disclosure, specific values of the first configuration value, the second configuration value, the third configuration value, the fourth configuration value and the first ratio, the second ratio, the third ratio and the fourth ratio may be set according to an actual situation.

For example, one configuration value may be used for terminal equipment and a descendant IAB-node served by the first IAB-node; or,
two configuration values may be used for terminal equipment and a descendant IAB-node served by the first IAB-node, for example, one configuration value is used for the terminal equipment, and the other configuration value is used for the descendant IAB-node; or,
one proportion may be used for terminal equipment and a descendant IAB-node served by the first IAB-node; or,
two proportions may be used for terminal equipment and a descendant IAB-node served by the first IAB-node, for example, one proportion is used for the terminal equipment, and the other configuration value is used for the descendant IAB-node; or,
one configuration value and one proportion may be used for terminal equipment and a descendant IAB-node served by the first IAB-node; for example, one configuration value is used for the terminal equipment and one proportion is used for the descendant IAB-node, or one proportion is used for the child terminal equipment and one configuration value is used for the descendant IAB-node.

In addition, a value of a timer may be used for terminal equipment and a descendant IAB-node served by the first IAB-node; or,
two values of a timer may be used for terminal equipment and a descendant IAB-node served by the first IAB-node, one value for the terminal equipment, and the other value for the descendant IAB-node.

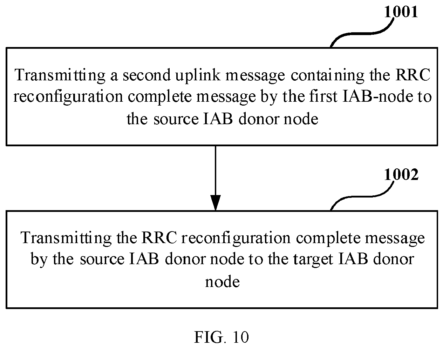

In step 803, the RRC reconfiguration complete message is transmitted to the target IAB donor node via the source IAB donor node. FIG. 10 is a schematic diagram of a method for executing step 803 of embodiment 1 of this disclosure. As shown in FIG. 10, the method includes:
step 1001: transmitting a second uplink message containing the RRC reconfiguration complete message by the first IAB-node to the source IAB donor node; and
step 1002: transmitting the RRC reconfiguration complete message by the source IAB donor node to the target IAB donor node.

In this way, the first IAB-node transmits the RRC reconfiguration complete message included in the second uplink message to the target IAB-donor-CU via the source IAB-donor-CU to complete inter-IAB-donor-CU migration or switching or topology adaptation of the terminal equipment, so that the target IAB-donor-CU is able to restart the suspended data transmission with the terminal equipment. Moreover, this method has little impact on current IAB-nodes, and is able to quickly apply new functions, that is, the inter-IAB-donor-CU migration or switching or topology adaptation of IAB-nodes, so that the entire system may better balance payloads between IAB-donor-CUs.

In step 1002, the source IAB donor node may transmit an Xn message or NG message including the RRC reconfiguration complete message to the target IAB donor node via an Xn interface or an NG interface.

In the embodiment of this disclosure, the second uplink message may include third indication information, the third indication information being used to indicate that the source IAB donor node transmits the RRC reconfiguration complete message to the target IAB donor node.

For example, the second uplink message is a third F1 message.

For example, the third F1 message is at least one of UE context setup response message or UE context modification response message.

For example, the RRC reconfiguration complete message of the terminal equipment to which the terminal equipment context setup response message or the terminal equipment context modification response message corresponds is included in the terminal equipment context setup response message or the terminal equipment context modification response message; or, the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated. For example, the terminal equipment context setup response message or the terminal equipment context modification response message includes two RRC reconfiguration complete messages, one of which is from a terminal to which the terminal equipment context setup response message or the terminal equipment context modification response message corresponds, and the other RRC reconfiguration complete message is from a terminal different from the terminal to which the terminal equipment context setup response message or the terminal equipment context modification response message corresponds.

For another example, the third F1 message is a UL RRC Message Transfer message.

For example, all the RRC reconfiguration complete messages are included in a UL RRC Message Transfer message, or, all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or, an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in a different UL RRC Message Transfer message; or, an RRC reconfiguration complete message transmitted by terminal equipment served by an IAB-node is included in a UL RRC Message Transfer message, and an RRC reconfiguration complete message transmitted by an IAB sub-node served by the IAB-node is included in a different UL RRC Message Transfer message.

In the embodiment of this disclosure, for the terminal equipment and/or descendant IAB-node served by the first IAB-node, step 802 may be adopted for all of them, or step 803 may be adopted for all of them, or step 802 may be adopted for a part of them, and step 803 may be adopted for the other part of them.

For example, the RRC reconfiguration complete message includes a first RRC reconfiguration complete message and a second RRC reconfiguration complete message. The first RRC reconfiguration complete message is an RRC reconfiguration complete message generated by a first terminal equipment and/or a first descendant IAB-node served by the first IAB-node, and the second RRC reconfiguration complete message is an RRC reconfiguration complete message generated by a second terminal equipment and/or a second descendant IAB-node served by the first IAB-node. The first IAB-node transmits the first uplink message containing the first RRC reconfiguration complete message to the target IAB donor node via the target path, and the first IAB-node transmits the second uplink message containing the second RRC reconfiguration complete message to the source IAB donor node, so as to transmit the second RRC reconfiguration complete message to the target IAB donor node via the source IAB donor node.

In the embodiment of this disclosure, the terminal equipment served by the descendant IAB-node served by the first IAB-node may also be processed in step 802 or step 803, or may be processed partially in step 802 and partially in step 803.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 2

The embodiment of this disclosure provides a migration method for an IAB-node, applicable to a first IAB donor node, the first IAB donor node being a source IAB donor node of a first IAB-node. This method corresponds to embodiment 1, and reference may be made to embodiment 1 for identical contents.

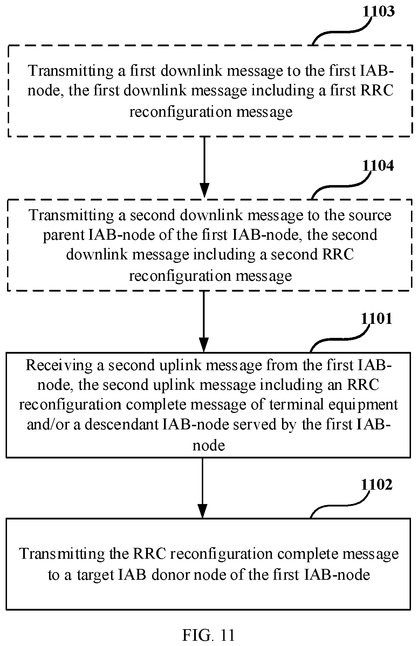

FIG. 11 is a schematic diagram of the migration method for an IAB-node of embodiment 2 of this disclosure. As shown in FIG. 11, the method includes:
step 1101: receiving a second uplink message from the first IAB-node, the second uplink message including an RRC reconfiguration complete message of terminal equipment and/or a descendant IAB-node served by the first IAB-node; and
step 1102: transmitting the RRC reconfiguration complete message to a target IAB donor node of the first IAB-node.

In step 1102, the source IAB donor node may transmit an Xn message or an NG message including the RRC reconfiguration complete message to the target IAB donor node via an Xn interface or an NG interface.

In the embodiment of this disclosure, the second uplink message may include third indication information, the third indication information being used to indicate that the source IAB donor node transmits the RRC reconfiguration complete message to the target IAB donor node.

For example, the second uplink message is a third F1 message.

For example, the third F1 message is at least one of UE context setup response message or UE context modification response message.

For example, the RRC reconfiguration complete message of the terminal equipment to which the terminal equipment context setup response message or the terminal equipment context modification response message corresponds is included in the terminal equipment context setup response message or the terminal equipment context modification response message; or, the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.

For example, all the RRC reconfiguration complete messages are included in a UL RRC Message Transfer message, or, all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or, an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in a different UL RRC Message Transfer message; or, an RRC reconfiguration complete message transmitted by terminal equipment served by an IAB-node is included in a UL RRC Message Transfer message, and an RRC reconfiguration complete message transmitted by an IAB sub-node served by the IAB-node is included in a different UL RRC Message Transfer message.

In the embodiment of this disclosure, as shown in FIG. 11, for example, the method further includes:
step 1103: transmitting a first downlink message to the first IAB-node, the first downlink message including a first RRC reconfiguration message; and
step 1104: transmitting a second downlink message to the source parent IAB-node of the first IAB-node, the second downlink message including a second RRC reconfiguration message.

In the embodiment of this disclosure, an order of execution of steps 1103 and 1104 is not limited.

In the embodiment of this disclosure, the second uplink message is also taken as a feedback message of the first downlink message; or, the method further includes: receiving a feedback message of the first downlink message.

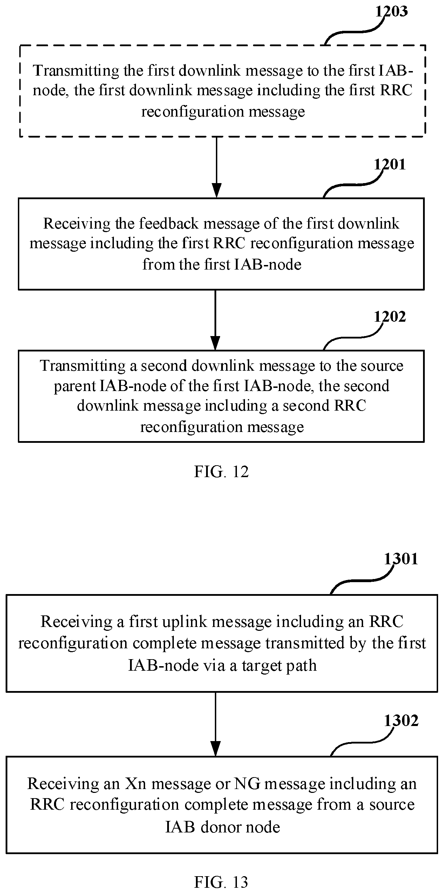

FIG. 12 is another schematic diagram of the migration method for an IAB-node of embodiment 2 of this disclosure. As shown in FIG. 12, the method includes:
step 1201: receiving the feedback message of the first downlink message including the first RRC reconfiguration message from the first IAB-node; and
step 1202: transmitting a second downlink message to the source parent IAB-node of the first IAB-node, the second downlink message including a second RRC reconfiguration message.

In the embodiment of this disclosure, when the first IAB donor node receives the feedback of the first RRC reconfiguration message from the first IAB-node, it transmits a second downlink message to the source parent IAB-node of the first IAB-node, the second downlink message including the second RRC reconfiguration message.

In the embodiment of this disclosure, as shown in FIG. 12, for example, the method further includes:
step 1203: transmitting the first downlink message to the first IAB-node, the first downlink message including the first RRC reconfiguration message.

In the embodiment of this disclosure, the first RRC reconfiguration message includes a key configured by the target IAB donor node of the first IAB-node.

For example, the first downlink message is a second F1 message.

For example, the first downlink message includes at least one of the following:
second indication information used for indicating that inter-CU IAB-node migration is to be performed, or indicating terminal equipment configuration performed for inter-CU IAB-node migration;
for example, the second indication information is the "indication" based upon which the first IAB-node suspends the traffics with the terminal equipment and/or the descendant IAB-node in the above first condition or second condition;
a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
the number and/or a ratio of at least one of terminal equipment, descendant IAB-node, message(s) and feedback(s).

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 3

The embodiment of this disclosure provides a migration method for an IAB-node, applicable to a second IAB donor node, the second IAB donor node being a target IAB donor node of a first IAB-node. This method corresponds to embodiment 1, and reference may be made to embodiment 1 for identical contents.

FIG. 13 is a schematic diagram of the migration method for an IAB-node of embodiment 3 of this disclosure. As shown in FIG. 13, the method includes:
step 1301: receiving a first uplink message including an RRC reconfiguration complete message transmitted by the first IAB-node via a target path; and/or
step 1302: receiving an Xn message or NG message including an RRC reconfiguration complete message from a source IAB donor node,
the RRC reconfiguration complete message being an RRC reconfiguration complete message of terminal equipment and/or descendant IAB-node served by the first IAB-node.

In the embodiment of this disclosure, for the terminal equipment and/or the descendant IAB-node served by the first IAB-node, when step 802 is adopted for all in embodiment 1, correspondingly, 1301 is also adopted for all in embodiment 3; when step 803 is used for all in embodiment 1, correspondingly, step 1302 is also used for all in embodiment 3; and when step 802 and step 803 are partially adopted in embodiment 1, correspondingly, step 1301 and step 1302 are partially adopted in embodiment 3.

In the embodiment of this disclosure, the target path is an F1 interface between a distributed unit of the first IAB-node and a centralized unit of the target IAB donor node.

In the embodiment of this disclosure, the RRC reconfiguration complete message from the source IAB donor node is transmitted via an Xn interface or an NG interface.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 4

The embodiment of this disclosure provides a migration method for an IAB-node, applicable to first IAB-node, a first IAB donor node and a second IAB donor node, the first IAB donor node being a source IAB donor node of the first IAB-node, and the second IAB donor node being a target IAB donor node of the first IAB-node. This method corresponds to embodiments 1 to 3, and reference may be made to the disclosure contained in embodiments 1 to 3 for identical contents.

In the embodiment of this disclosure, a second IAB-node is a source parent IAB-node of the first IAB-node, and a third IAB-node is a target parent IAB-node of the first IAB-node.

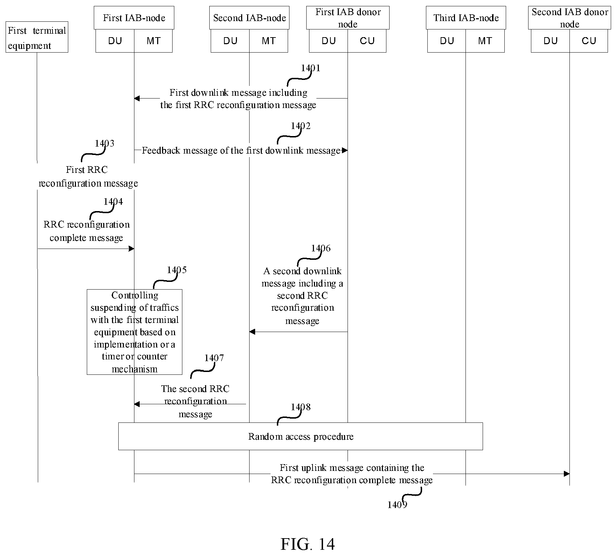

FIG. 14 is a schematic diagram of the migration method for an IAB-node of embodiment 4 of this disclosure. In FIG. 14, that the first IAB-node serves for a first terminal equipment is taken as an example. However, the first IAB-node may also serve for other terminal equipment. In addition, the first IAB-node may also serve for at least one descendant IAB-node.

As shown in FIG. 14, the method includes:
step 1401: transmitting a first downlink message including a first RRC reconfiguration message by the first IAB donor node to the first IAB-node;
step 1402: transmitting feedback message of the first downlink message by the first IAB-node to the first IAB donor node;
step 1403: transmitting the first RRC reconfiguration message by the first IAB-node to the first terminal equipment;
step 1404: transmitting a RRC reconfiguration complete message by the first terminal equipment to the first IAB-node;
step 1405: controlling suspending of traffics with the first terminal equipment by the first IAB-node based on implementation or a timer or counter mechanism;
step 1406: transmitting a second downlink message including a second RRC reconfiguration message by the first IAB donor node to the second IAB-node;
step 1407: transmitting the second RRC reconfiguration message by the second IAB-node to the first IAB-node;
step 1408: initiating a random access procedure by the first IAB-node to the third IAB-node according to the second RRC reconfiguration message; and
step 1409: transmitting a first uplink message containing the RRC reconfiguration complete message by the first IAB-node to the second IAB donor node via an F1 interface.

In this way, this method has less restrictions on signaling flow of the switching or migration or topology adaptation of the IAB-MT and IAB-DU of the migrating IAB-node and the terminal equipment and/or descendant IAB-node served by the migrating IAB-node during the process of inter-IAB-donor-CU migration or topology adaptation of the IAB-node, thereby ensuring a more flexible process of inter-IAB-donor-CU migration or topology adaptation of the IAB-node.

In the embodiment of this disclosure, there is no restriction on orders of execution of steps 1401-1406 and steps 1405-1407.

In the embodiment of this disclosure, step 1401 is before step 1402, step 1401 is before step 1403, step 1403 is before step 1404, step 1405 is before step 1408, and step 1408 is before step 1409, and there is no restriction on an order of execution of other steps.

That is, there is no restriction on an order of the first downlink message and the second downlink message; after the first IAB-node receives the first downlink message, the mechanism based on implementation or a timer or a count is applied; and there is no restriction on an order of execution of the mechanism based on implementation or a timer or a count and reception of the second RRC reconfiguration message from the second IAB-node.

It can be seen from the above embodiment that the first IAB-node stores the received RRC reconfiguration complete messages from the terminal equipment and/or descendant IAB-node served thereby, transmits the first uplink message including the RRC reconfiguration complete messages to the target IAB-donor-CU via the target path to complete inter-IAB-donor-CU migration or switching or topology adaptation of the terminal equipment and/or descendant IAB-node, thereby enabling the target IAB-donor-CU to restart the suspended data transmission with the terminal equipment and/or the descendant IAB-node. In addition, this method has less restrictions on signaling flow of the switching or migration or topology adaptation of the IAB-MT and IAB-DU of the migrating IAB-node and the terminal equipment and/or descendant IAB-node served by the migrating IAB-node during the process of inter-IAB-donor-CU migration or topology adaptation of the IAB-node, thereby ensuring a more flexible process of inter-IAB-donor-CU migration or topology adaptation of the IAB-node.

### Embodiment 5

The embodiment of this disclosure provides a migration method for an IAB-node, applicable to first IAB-node, a first IAB donor node and a second IAB donor node, the first IAB donor node being a source IAB donor node of the first IAB-node, and the second IAB donor node being a target IAB donor node of the first IAB-node. This method corresponds to embodiments 1 to 3, and reference may be made to the disclosure contained in embodiments 1 to 3 for identical contents.

In the embodiment of this disclosure, a second IAB-node is a source parent IAB-node of the first IAB-node, and a third IAB-node is a target parent IAB-node of the first IAB-node.

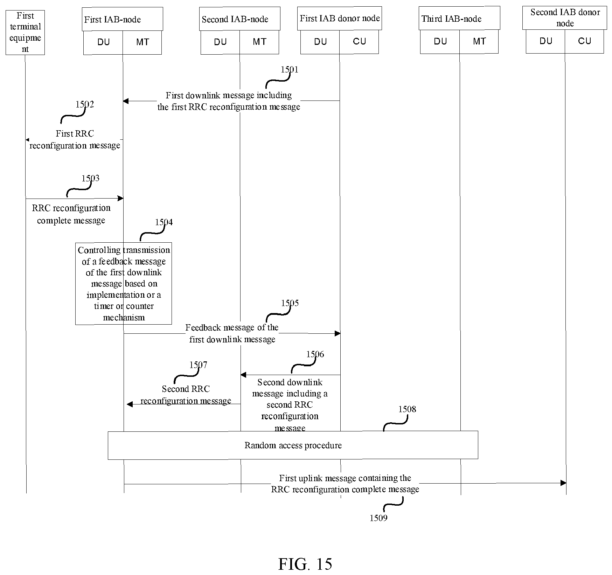

FIG. 15 is a schematic diagram of the migration method for an IAB-node of embodiment 5 of this disclosure. In FIG. 15, that the first IAB-node serves for a first terminal equipment is taken as an example. However, the first IAB-node may also serve for other terminal equipment. In addition, the first IAB-node may also serve for at least one descendant IAB-node.

As shown in FIG. 15, the method includes:
step 1501: transmitting a first downlink message including a first RRC reconfiguration message by the first IAB donor node to the first IAB-node;
step 1502: transmitting the first RRC reconfiguration message by the first IAB-node to a first terminal equipment;
step 1503: transmitting an RRC reconfiguration complete message by the first terminal equipment to the first IAB-node;
step 1504: controlling transmission of a feedback message of the first downlink message to the first IAB donor node by the first IAB-node based on implementation or a timer or counter mechanism;
step 1505: transmitting the feedback message of the first downlink message by the first IAB-node to the first IAB donor node;
step 1506: transmitting a second downlink message including a second RRC reconfiguration message by the first IAB donor node to the second IAB-node;
step 1507: transmitting the second RRC reconfiguration message by the second IAB-node to the first IAB-node;
step 1508: initiating a random access procedure towards the third IAB-node by the first IAB-node according to the second RRC reconfiguration message; and
step 1509: transmitting a first uplink message containing the RRC reconfiguration complete message by the first IAB-node to the second IAB donor node via an F1 interface.

In this way, this method may reduce suspending of traffics of the first IAB-node with the terminal equipment served by it and the terminal equipment served by the descendant IAB-node by controlling the order of the execution of the switching or migration or topology adaptation of the IAB-MT and IAB-DU served by the first IAB-node and the terminal equipment and/or the descendant IAB-node served by the first IAB-node in the process of inter-IAB-donor-CU migration or topology adaptation of the IAB-node.

In the embodiment of this disclosure, step 1506 is executed after step 1505.

It can be seen from the above embodiment that the first IAB-node stores the received RRC reconfiguration complete messages from the terminal equipment and/or descendant IAB-node served thereby, transmits the first uplink message including the RRC reconfiguration complete messages to the target IAB-donor-CU via the target path to complete inter-IAB-donor-CU migration or switching or topology adaptation of the terminal equipment and/or descendant IAB-node, thereby enabling the target IAB-donor-CU to restart the suspended data transmission with the terminal equipment and/or the descendant IAB-node. In addition, this method may reduce suspending of traffics of the first IAB-node with the terminal equipment served by it and the terminal equipment served by the descendant IAB-node by controlling the order of the execution of the switching or migration or topology adaptation of the IAB-MT and IAB-DU served by the first IAB-node and the terminal equipment and/or the descendant IAB-node served by the first IAB-node in the process of inter-IAB-donor-CU migration or topology adaptation of the IAB-node.

### Embodiment 6

The embodiment of this disclosure provides a migration method for an IAB-node, applicable to first IAB-node, a first IAB donor node and a second IAB donor node, the first IAB donor node being a source IAB donor node of the first IAB-node, and the second IAB donor node being a target IAB donor node of the first IAB-node. This method corresponds to embodiments 1 to 3, and reference may be made to the disclosure contained in embodiments 1 to 3 for identical contents.

In the embodiment of this disclosure, a second IAB-node is a source parent IAB-node of the first IAB-node, and a third IAB-node is a target parent IAB-node of the first IAB-node.

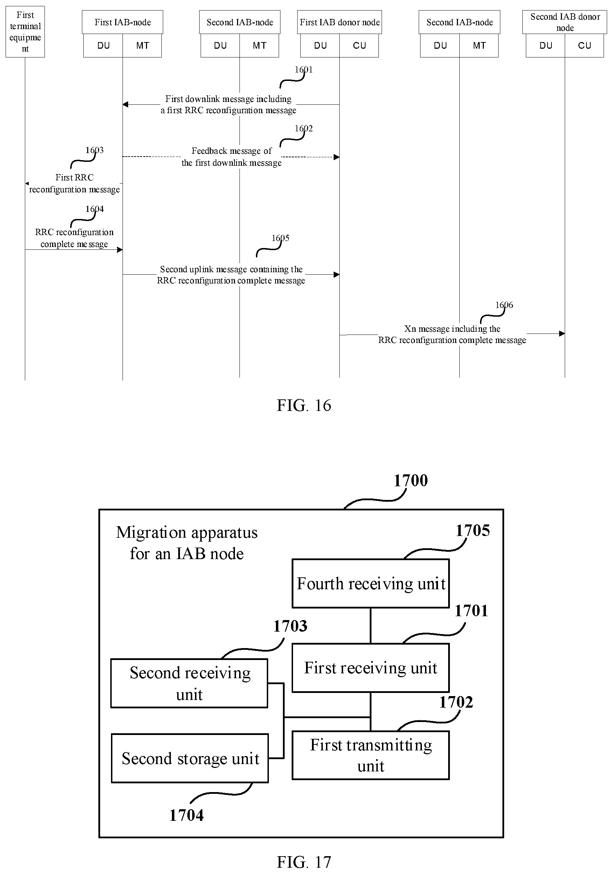

FIG. 16 is a schematic diagram of the migration method for an IAB-node of embodiment 6 of this disclosure. In FIG. 16, that the first IAB-node serves for a first terminal equipment is taken as an example. However, the first IAB-node may also serve for other terminal equipment. In addition, the first IAB-node may also serve for at least one descendant IAB-node.

As shown in FIG. 16, the method includes:
step 1601: transmitting a first downlink message including a first RRC reconfiguration message by the first IAB donor node to the first IAB-node;
step 1602: transmitting a feedback message of the first downlink message by the first IAB-node to the first IAB donor node;
step 1603: transmitting the first RRC reconfiguration message by the first IAB-node to the first terminal equipment;
step 1604: transmitting the RRC reconfiguration complete message by the first terminal equipment to the first IAB-node;
step 1605: transmitting a second uplink message containing the RRC reconfiguration complete message by the first IAB-node to the first IAB donor node via an F1 interface; and
step 1606: transmitting an Xn message including the RRC reconfiguration complete message by the first IAB donor node to the second IAB donor node via an Xn interface.

In this way, the first IAB-node transmits the RRC reconfiguration complete message included in the second uplink message to the target IAB-donor-CU via the source IAB-donor-CU to complete inter-IAB-donor-CU migration or switching or topology adaptation of the terminal equipment, so that the target IAB-donor-CU is able to restart the suspended data transmission with the terminal equipment. Moreover, this method has little impact on current IAB-nodes, and is able to quickly apply new functions, that is, the inter-IAB-donor-CU migration or switching or topology adaptation of IAB-nodes, so that the entire system may better balance payloads between IAB-donor-CUs.

In the embodiment of this disclosure, step 1602 may be executed after step 1601, that is, after the first IAB-node receives the first downlink message including the first RRC reconfiguration message, the first IAB-node immediately transmits the feedback message of the first downlink message to the first IAB donor node. Or, it may also be that in step 1605, the second uplink message is also taken as the feedback message of the first downlink message, and step 1602 is not executed.

It can be seen from the above embodiments that the first IAB-node transmits the RRC reconfiguration complete message included in the second uplink message to the target IAB-donor-CU via the source IAB-donor-CU to complete the inter-IAB-donor-CU migration or switching or topology adaptation of the terminal equipment, so that the target IAB-donor-CU may restart the suspended data transmission with the terminal equipment. Moreover, this method has little impact on current IAB-nodes, and is able to quickly apply new functions, that is, the inter-IAB-donor-CU migration or switching or topology adaptation of IAB-nodes, so that the entire system may better balance payloads between IAB-donor-CUs.

### Embodiment 7

The embodiment of this disclosure provides a migration apparatus for an IAB-node, applicable to a first IAB-node. As a principle of the apparatus for solving problems is similar to that of the method in Embodiment 1, reference may be made to the implementation of the method in Embodiment 1 for implementation of the apparatus, with identical contents being not going to be repeated herein any further.

FIG. 17 is a schematic diagram of the migration apparatus for an IAB-node of embodiment 7 of this disclosure. As shown in FIG. 17, an apparatus 1700 includes:
a first receiving unit 1701 configured to receive an RRC reconfiguration complete message of terminal equipment and/or a descendant IAB-node served by the first IAB-node; and
a first transmitting unit 1702 configured to transmit a first uplink message containing the RRC reconfiguration complete message to a target IAB donor node via a target path, or transmit the RRC complete message to a target IAB donor node via a source IAB donor node.

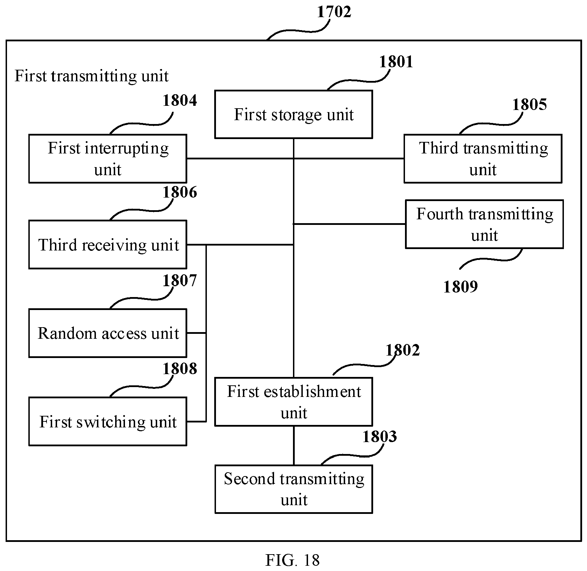

FIG. 18 is a schematic diagram of the first transmitting unit of Embodiment 7 of this disclosure. As shown in FIG. 18, the first transmitting unit 1702 includes:
a first storage unit 1801 configured to store the RRC reconfiguration complete message;
a first establishment unit 1802 configured to establish the target path; and
a second transmitting unit 1803 configured to transmit the first uplink message to the target IAB donor node via the target path.

As shown in FIG. 18, the first transmitting unit 1702 may further include:
a first suspending unit 1804 configured to suspend traffics with the terminal equipment and/or the descendant IAB-node when a first condition is satisfied.

For example, the first condition includes at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a first timer expires;
the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio; and
the number of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio.

As shown in FIG. 18, the first transmitting unit 1702 may further include:
a third transmitting unit 1805 configured to transmit a feedback message of a first downlink message to the source IAB donor node when a second condition is satisfied.

For example, the second condition includes at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a second timer expires;
the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages of the RRC reconfiguration messages transmitted by it or from which the first IAB-node receives the RRC reconfiguration complete messages reaches a third ratio; and
the number of the RRC reconfiguration messages transmitted by the first IAB-node to the terminal equipment and/or the descendant IAB-node served by the first IAB-node or the number of received feedback of the RRC reconfiguration messages of the RRC reconfiguration messages of the terminal equipment and/or the descendant IAB-node served by the first IAB-node or the number of the received RRC reconfiguration complete messages of the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of received feedback of the RRC reconfiguration messages of the terminal equipment and/or the descendant IAB-node served by the first IAB-node or a ratio of the received RRC reconfiguration complete messages of the terminal equipment and/or the descendant IAB-node served by the first IAB-node reaches a fourth ratio.

For example, as shown in FIG. 7, the apparatus 1700 further includes:
a second receiving unit 1703 configured to receive first indication information,
the first indication information being used to indicate that the RRC reconfiguration complete message is an RRC reconfiguration complete message protected by security configuration configured by the target IAB donor node, or indicate that the RRC reconfiguration complete message is transmitted to the target IAB donor node, or indicate that the first IAB-node stores the RRC reconfiguration complete message.

For example, the first indication information is included in an RLC unit header, or is included in an MAC unit header.

For example, as shown in FIG. 7, the apparatus 1700 further includes:
a second storage unit 1704 configured to be used by an MAC layer or an RLC layer or a BAP layer of a distributed unit of the first IAB-node to store the RRC reconfiguration complete message.

For example, the first storage unit 1801 includes the second storage unit 1704.

For example, the apparatus further includes: a first delivering unit configured to be used by the MAC layer of the IAB-DU of the first IAB-node to deliver the first indication information to the RLC layer. Or, the apparatus further includes: a third storage unit configured to be used by a BAP layer of the IAB-MT to store the RRC reconfiguration complete message when the first IAB-node IAB-DU receives the first indication information; or, the apparatus further includes: a fourth storage unit configured to be used by a BAP layer of the IAB-MT to store the RRC reconfiguration complete message when the first indication information is from a descendant IAB-node served by the first IAB-node; or, the apparatus includes: a second delivering unit configured to be used by the MAC layer or RLC layer of the IAB-DU of the first IAB-node to deliver the first indication information to the BAP layer.

Reference may be made to the disclosure contained in Embodiment 1 for specific contents of storing the RRC reconfiguration complete message, which shall not be described herein any further.

For example, as shown in FIG. 18, the first transmitting unit 1702 further includes:
a third receiving unit 1806 configured to receive a second RRC reconfiguration message from a source parent IAB-node;
a random access unit 1807 configured to initiate a random access procedure towards a target parent node of the first IAB-node according to the second RRC reconfiguration message; and
a first switching unit 1808 configured to switch to a target path.

In the embodiment of this disclosure, the target path is an F1 interface between a distributed unit (DU) of the first IAB-node and a centralized unit (CU) of the target IAB donor node.

For example, the first uplink message is a first F1 message.

For example, the first F1 message is at least one of UE context setup response message and UE context modification response message.

For example, the RRC reconfiguration complete message of the terminal equipment corresponding to the terminal equipment context setup response message or the terminal equipment context modification response message is included in the terminal equipment context setup response message or the terminal equipment context modification response message; or, the terminal equipment context setup response message or the terminal equipment context modification response message includes at least one RRC reconfiguration complete message, and for one RRC reconfiguration complete message in the at least one RRC reconfiguration complete message, terminal equipment transmitting this RRC reconfiguration complete message is identical to or different from terminal equipment associated with the terminal equipment context setup response message or the terminal equipment context modification response message.

For example, the first F 1 message is a UL RRC Message Transfer message.

For example, all RRC reconfiguration complete messages are included in an uplink RRC message transfer message; or, all RRC reconfiguration complete messages transmitted by the terminal equipment are included in an uplink RRC message transfer message, and all RRC reconfiguration complete messages transmitted by the IAB descendant node(s) are included in a different uplink RRC message transfer message; or, RRC reconfiguration complete message(s) transmitted by terminal equipment or IAB descendant node(s) served by an IAB-node are included in one uplink RRC message transfer message, and RRC reconfiguration complete message(s) transmitted by terminal equipment or IAB descendant node(s) served by another IAB-node are included in one different uplink RRC message transfer message; or, an RRC reconfiguration complete message transmitted by terminal equipment served by an IAB-node is included in one uplink RRC message transfer message, and an RRC reconfiguration complete message transmitted by an IAB descendant node served by the IAB-node is included in one different uplink RRC message transfer message.

For example, as shown in FIG. 17, the apparatus 1700 further includes:
a fourth receiving unit 1705 configured to receive a first downlink message from the source IAB donor node,
the first downlink message comprising a first RRC reconfiguration message, the first RRC reconfiguration message comprising a key configured by the target IAB donor node.

For example, the first downlink message is a second F1 message.

For example, the first downlink message includes at least one of the following:
second indication information used for indicating that inter-CU IAB-node migration is to be performed, or indicating terminal equipment configuration performed for inter-CU IAB-node migration;
a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
the number and/or a ratio of at least one of terminal equipment, descendant IAB-node, message(s) and feedback(s).

For example, as shown in FIG. 17, the first transmitting 1702 further includes:
a fourth transmitting unit 1809 configured to transmit a second uplink message containing the RRC reconfiguration complete message to the source IAB donor node,
the RRC reconfiguration complete message being transmitted by the source IAB donor node to the target IAB donor node.

For example, the RRC reconfiguration complete message is transmitted by the source IAB donor node to the target IAB donor node via an Xn interface or an NG interface.

For example, the second uplink message includes third indication information, the third indication information being used to indicate that the source IAB donor node transmits the RRC reconfiguration complete message to the target IAB donor node.

For example, the second uplink message is a third F1 message.

For example, the third F1 message is at least one of UE context setup response message or UE context modification response message.

For example, the RRC reconfiguration complete message of the terminal equipment to which the terminal equipment context setup response message or the terminal equipment context modification response message corresponds is included in the terminal equipment context setup response message or the terminal equipment context modification response message; or, the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.

For example, the third F1 message is a UL RRC Message Transfer message.

For example, all the RRC reconfiguration complete messages are included in a UL RRC Message Transfer message, or, all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or, an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in a different UL RRC Message Transfer message; or, an RRC reconfiguration complete message transmitted by terminal equipment served by an IAB-node is included in a UL RRC Message Transfer message, and an RRC reconfiguration complete message transmitted by an IAB sub-node served by the IAB-node is included in one different UL RRC Message Transfer message.

For example, the RRC reconfiguration complete message includes a first RRC reconfiguration complete message and a second RRC reconfiguration complete message. The first RRC reconfiguration complete message is an RRC reconfiguration complete message generated by a first terminal equipment and/or a first descendant IAB-node served by the first IAB-node, and the second RRC reconfiguration complete message is an RRC reconfiguration complete message generated by a second terminal equipment and/or a second descendant IAB-node served by the first IAB-node. The first IAB-node transmits the first uplink message containing the first RRC reconfiguration complete message to the target IAB donor node via the target path, and the first IAB-node transmits the second uplink message containing the second RRC reconfiguration complete message to the source IAB donor node, so as to transmit the second RRC reconfiguration complete message to the target IAB donor node via the source IAB donor node.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 8

The embodiment of this disclosure provides a migration apparatus for an IAB-node, applicable to a first IAB donor node, the first IAB donor node being a source IAB donor node of a first IAB-node. As a principle of the apparatus for solving problems is similar to that of the method in Embodiment 2, reference may be made to the implementation of the method in Embodiment 2 for implementation of the apparatus, with identical contents being not going to be repeated herein any further.

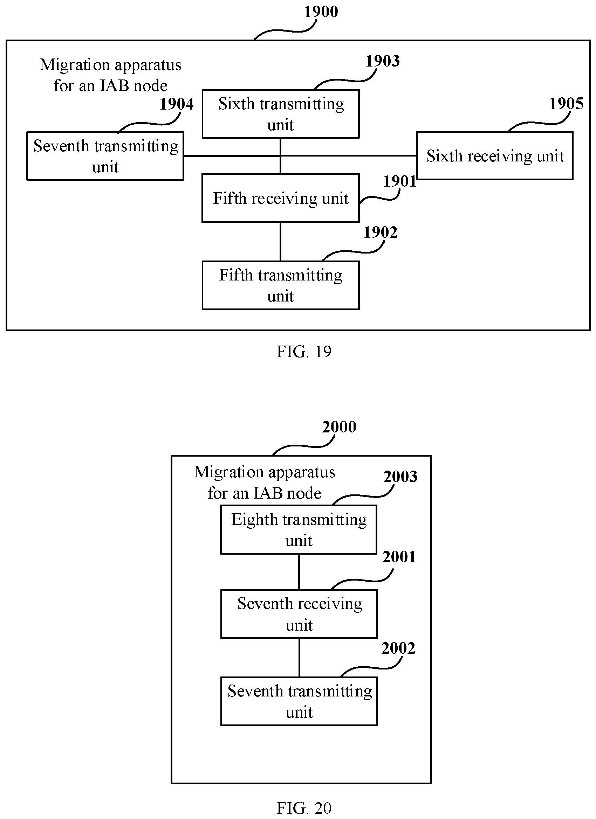

FIG. 19 is a schematic diagram of the migration apparatus for an IAB-node of embodiment 8 of this disclosure. As shown in FIG. 19, an apparatus 1900 includes:
a fifth receiving unit 1901 configured to receive a second uplink message from the first IAB-node, the second uplink message comprising an RRC reconfiguration complete message of terminal equipment and/or a descendant IAB-node served by the first IAB-node; and
a fifth transmitting unit 1902 configured to transmit the RRC reconfiguration complete message to a target IAB donor node of the first IAB-node.

In the embodiment of this disclosure, the fifth transmitting unit 1902 transmits an Xn message or an NG message comprising the RRC reconfiguration complete message to the target IAB donor node via an Xn interface or an NG interface.

For example, the second uplink message includes third indication information, the third indication information being used to indicate that the source IAB donor node transmits the RRC reconfiguration complete message to the target IAB donor node.

For example, the second uplink message is a third F1 message.

For example, the third F1 message is at least one of UE context setup response message or UE context modification response message, or, the third F1 message is a UL RRC transfer message.

For example, the RRC reconfiguration complete message of the terminal equipment to which the terminal equipment context setup response message or the terminal equipment context modification response message corresponds is included in the terminal equipment context setup response message or the terminal equipment context modification response message; or, the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.

For example, all the RRC reconfiguration complete messages are included in a UL RRC Message Transfer message, or, all the RRC reconfiguration complete messages transmitted by the terminal equipment are included in a UL RRC Message Transfer message, and all RRC reconfiguration complete messages transmitted by the IAB sub-node are included in a different UL RRC Message Transfer message; or, an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in a different UL RRC Message Transfer message; or, an RRC reconfiguration complete message transmitted by terminal equipment served by an IAB-node is included in a UL RRC Message Transfer message, and an RRC reconfiguration complete message transmitted by an IAB sub-node served by the IAB-node is included in a different UL RRC Message Transfer message.

For example, as shown in FIG. 19, the apparatus 1900 further includes:
a sixth transmitting unit 1903 configured to transmit a first downlink message to the first IAB-node, the first downlink message including a first RRC reconfiguration message; and
a seventh transmitting unit 1904 configured to transmit a second downlink message to the source parent IAB-node of the first IAB-node, the second downlink message including a second RRC reconfiguration message.

For example, the second uplink message is also taken as a feedback message of the first downlink message; or,
the apparatus 1900 further includes: a sixth receiving unit 1905 configured to receive a feedback message of the first downlink message.

FIG. 20 is another schematic diagram of the migration apparatus for an IAB-node of embodiment 8 of this disclosure. As shown in FIG. 20, an apparatus 2000 includes:
a seventh receiving unit 2001 configured to receive a feedback message of a first downlink message including a first RRC reconfiguration message from the first IAB-node; and
a seventh transmitting unit 2002 configured to transmit a second downlink message to a source parent IAB-node of the first IAB-node, the second downlink message including a second RRC reconfiguration message.

For example, when the first IAB donor node receives the feedback of the first RRC reconfiguration message from the first IAB-node, it transmits a second downlink message to the source parent IAB-node of the first IAB-node, the second downlink message including a second RRC reconfiguration message.

For example, as shown in FIG. 20, the apparatus 2000 further includes:
an eighth transmitting unit 2003 configured to transmit the first downlink message to the first IAB-node, the first downlink message including the first RRC reconfiguration message.

For example, the first RRC reconfiguration message includes a key configured by the target IAB donor node of the first IAB-node.

For example, the first downlink message is a second F1 message.

For example, the first downlink message includes at least one of the following:
second indication information used for indicating that inter-CU IAB-node migration is to be performed, or indicating terminal equipment configuration performed for inter-CU IAB-node migration;
a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
the number and/or a ratio of at least one of terminal equipment, descendant IAB-node, message(s) and feedback(s).

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 9

The embodiment of this disclosure provides a migration apparatus for an IAB-node, applicable to a second IAB donor node, the second IAB donor node being a target IAB donor node of a first IAB-node. As a principle of the apparatus for solving problems is similar to that of the method in Embodiment 3, reference may be made to the implementation of the method in Embodiment 3 for implementation of the apparatus, with identical contents being not going to be repeated herein any further.

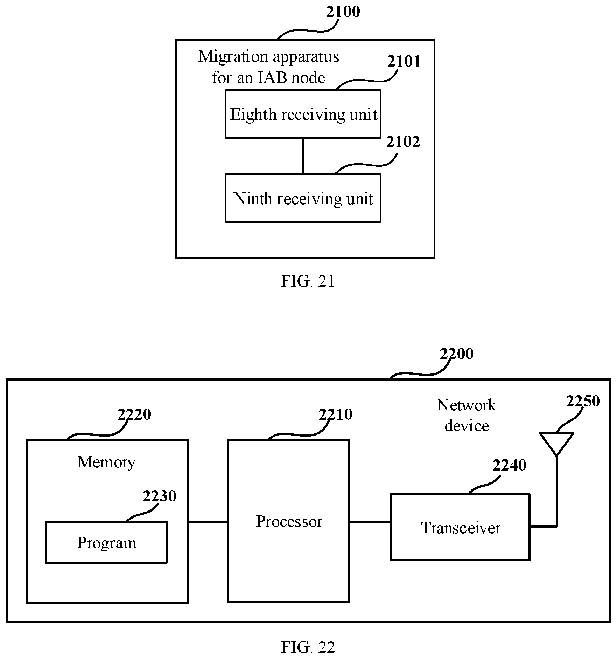

FIG. 21 is a schematic diagram of the migration apparatus for an IAB-node of embodiment 9 of this disclosure. As shown in FIG. 21, an apparatus 2100 includes:
an eighth receiving unit 2101 configured to receive a first uplink message including an RRC reconfiguration complete message transmitted by the first IAB-node via a target path; and/or
a ninth receiving unit 2102 configured to receive an Xn message or NG message including an RRC reconfiguration complete message from a source IAB donor node,
the RRC reconfiguration complete message being an RRC reconfiguration complete message of terminal equipment and/or descendant IAB-node served by the first IAB-node.

For example, the target path is an F1 interface between a distributed unit of the first IAB-node and a centralized unit of the target IAB donor node.

For example, the RRC reconfiguration complete message from the source IAB donor node is transmitted via an Xn interface or an NG interface.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 10

The embodiment of this disclosure provides a network device, including the migration apparatus for an IAB-node as described in Embodiment 7.

FIG. 22 is a block diagram of a systematic structure of the network device of embodiment 10 of this disclosure. As shown in FIG. 22, aterminal equipment 2200 may include a processor 2210 and a memory 2220, the memory 2220 being coupled to the processor 2210. It should be noted that this figure is illustrative only, and other types of structures may also be used, so as to supplement or replace this structure and achieve a telecommunications function or other functions.

In one implementation, the functions of the migration apparatus for an IAB-node may be integrated into the processor 2210.

The processor 2210 may be configured to: receive an RRC reconfiguration complete message of terminal equipment and/or a descendant IAB-node served by the first IAB-node; and transmit a first uplink message containing the RRC reconfiguration complete message to a target IAB donor node via a target path, or transmit the RRC complete message to a target IAB donor node via a source IAB donor node.

In another implementation, the migration apparatus for an IAB-node and the processor 2210 may be configured separately; for example, the migration apparatus for an IAB-node may be configured as a chip connected to the processor 2210, and the functions of the migration apparatus for an IAB-node are executed under control of the processor 2210.

Furthermore, as shown in FIG. 22, the network device 2200 may further include a transceiver 2240, and an antenna 2250, etc. Wherein, functions of the above components are similar to those in the prior art, and shall not be described herein any further. It should be noted that the network device 2200 does not necessarily include all the parts shown in FIG. 22. Furthermore, the network device 2200 may include parts not shown in FIG. 22, and the prior art may be referred to.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 11

The embodiment of this disclosure provides a network device, including the migration apparatus for an IAB-node as described in Embodiment 8.

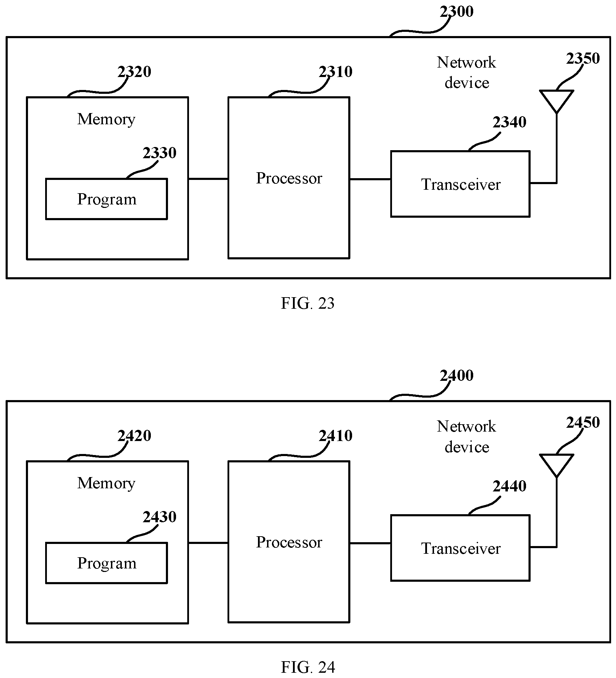

FIG. 23 is a block diagram of a systematic structure of the network device of embodiment 11 of this disclosure. As shown in FIG. 23, a network device 2300 may include a processor 2310 and a memory 2320, the memory 2320 being coupled to the processor 2310. Wherein, the memory 2320 may store various data, and furthermore, it may store a program 2330 for information processing, and execute the program 2330 under control of the processor 2310, so as to receive various information transmitted by terminal equipment, and transmit various information to the terminal equipment.

In one implementation, the functions of the migration apparatus for an IAB-node may be integrated into the processor 2310. Wherein, the processor 2310 may be configured to: receive a second uplink message from the first IAB-node, the second uplink message comprising an RRC reconfiguration complete message of terminal equipment and/or a descendant IAB-node served by the first IAB-node; and transmit the RRC reconfiguration complete message to a target IAB donor node of the first IAB-node.

Or, the processor 2310 may be configured to: receive a feedback message of a first downlink message including a first RRC reconfiguration message from the first IAB-node; and transmit a second downlink message to a source parent IAB-node of the first IAB-node, the second downlink message including a second RRC reconfiguration message.

In another implementation, the migration apparatus for an IAB-node and the processor 2310 may be configured separately; for example, the migration apparatus for an IAB-node may be configured as a chip connected to the processor 2310, and the functions of the migration apparatus for an IAB-node are executed under control of the processor 2310.

As shown in FIG. 23, the network device 2300 may further include a transceiver 2340, and an antenna 2350, etc. Wherein, functions of the above components are similar to those in the prior art, and shall not be described herein any further. It should be noted that the network device 2300 does not necessarily include all the parts shown in FIG. 23. Furthermore, the network device 2300 may include parts not shown in FIG. 23, and the prior art may be referred to.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 12

The embodiment of this disclosure provides a network device, including the migration apparatus for an IAB-node as described in Embodiment 9.

FIG. 24 is a block diagram of a systematic structure of the network device of embodiment 11 of this disclosure. As shown in FIG. 24, a network device 2400 may include a processor 2410 and a memory 2420, the memory 2420 being coupled to the processor 2410. Wherein, the memory 2420 may store various data, and furthermore, it may store a program 2430 for information processing, and execute the program 2430 under control of the processor 2410, so as to receive various information transmitted by terminal equipment, and transmit various information to the terminal equipment.

In one implementation, the functions of the migration apparatus for an IAB-node may be integrated into the processor 2410. Wherein, the processor 2410 may be configured to: receive a first uplink message including an RRC reconfiguration complete message transmitted by the first IAB-node via a target path; and/or, receive an Xn message or NG message including an RRC reconfiguration complete message from a source IAB donor node, the RRC reconfiguration complete message being an RRC reconfiguration complete message of terminal equipment and/or descendant IAB-node served by the first IAB-node.

In another implementation, the migration apparatus for an IAB-node and the processor 2410 may be configured separately; for example, the migration apparatus for an IAB-node may be configured as a chip connected to the processor 2410, and the functions of the migration apparatus for an IAB-node are executed under control of the processor 2410.

As shown in FIG. 24, the network device 2400 may further include a transceiver 2440, and an antenna 2450, etc. Wherein, functions of the above components are similar to those in the prior art, and shall not be described herein any further. It should be noted that the network device 2400 does not necessarily include all the parts shown in FIG. 24. Furthermore, the network device 2400 may include parts not shown in FIG. 24, and the prior art may be referred to.

It can be seen from the above embodiment that by transmitting the first uplink message containing the RRC reconfiguration complete message to the target IAB donor node via the target path, or by transmitting the RRC reconfiguration complete message to the target IAB donor node via the source IAB donor node, the target IAB donor node is able to obtain the RRC reconfiguration complete message of the terminal equipment and/or the descendant IAB-node served by the migrating IAB-node, and further know whether the terminal equipment and/or the descendant IAB-node have completed switching of the path. Hence, data transmission with the terminal equipment and/or the descendant IAB-node suspended by performing the process of inter-IAB-donor-CU migration or topology adaptation of the migrating IAB-node may be restarted.

### Embodiment 13

The embodiment of this disclosure provides a communication system.

For example, the communication system includes a first network device, a second network device and terminal equipment. The first network device is the network device according to Embodiment 11, and the second network device is the network device according to Embodiment 12. That is, the terminal equipment is directly connected to an IAB donor node.

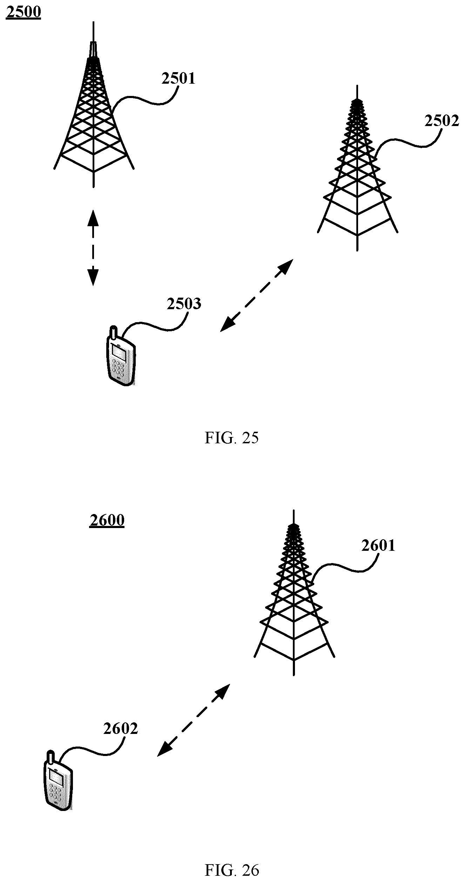

FIG. 25 is a schematic diagram of the communication system of embodiment 13 of this disclosure. As shown in FIG. 25, a communication system 2500 includes a first network device 2501, a second network device 2502 and terminal equipment 2503. The terminal equipment 2503 is directly connected to the first network device 2501 or the second network device 2502 taken as an IAB donor node.

For another example, the communication system includes a first network device and terminal equipment. The first network device is the network device according to Embodiment 11 or 12, and the terminal equipment is directly connected to an IAB donor node, the IAB donor node being a source IAB donor node or a target IAB donor node.

FIG. 26 is another schematic diagram of the communication system of embodiment 13 of this disclosure. As shown in FIG. 26, a communication system 2600 includes a first network device 2601 and terminal equipment 2602, the terminal equipment 2602 being directly connected to the first network device 2601 as an IAB donor node.

For another example, the communication system includes a first network device, a second network device, a third network device and terminal equipment. The first network device is the network device according to Embodiment 11, the second network device is the network device according to Embodiment 12, and the third network device is the network device according to Embodiment 10. That is, the third network device is taken as a relay node, i.e. a first IAB-node.

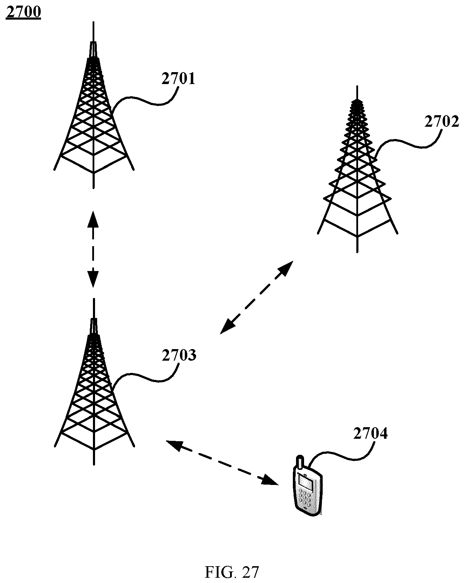

FIG. 27 is a further schematic diagram of the communication system of embodiment 13 of this disclosure. As shown in FIG. 27, a communication system 2700 includes a first network device 2701, a second network device 2702, a third network device 2703, and terminal equipment 2704. The third network device 2703 is taken as a relay node, i.e. a first IAB-node, and the terminal equipment 2704 is connected to the first network device 2701 or the second network device 2702 via the third network device 2703.

For another example, the communication system includes a first network device, a second network device, a third network device, a fourth network device and terminal equipment. The first network device is the network device according to Embodiment 11, the second network device is the network device according to Embodiment 12, and the third network device is the network device according to Embodiment 10. That is, the third network device is taken as a relay node, i.e. a first IAB-node, the fourth network device is a descendant node of the first IAB-node, and the terminal equipment is terminal equipment served by the descendant node of the first IAB-node, or the terminal equipment is terminal equipment served by the first IAB-node.

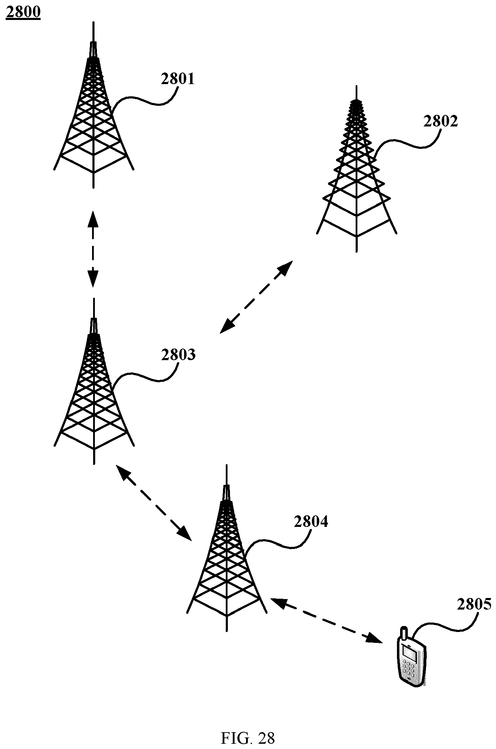

FIG. 28 is still another schematic diagram of the communication system of embodiment 13 of this disclosure. As shown in FIG. 28, a communication system 2800 includes a first network device 2801, a second network device 2802, a third network device 2803, a fourth network device 2804, and terminal equipment 2805. The third network device 2803 is taken as a relay node, i.e. a first IAB-node, the fourth network device 2804 is a descendant IAB-node of the third network device 2803, i.e. the first IAB-node, and the terminal equipment 2805 is terminal equipment served by the fourth network device 2804, i.e. the descendant IAB-node of the first IAB-node.

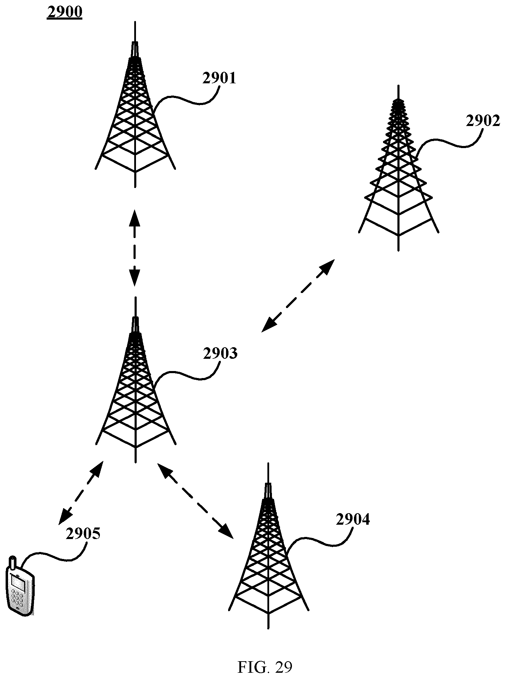

FIG. 29 is yet another schematic diagram of the communication system of embodiment 13 of this disclosure. As shown in FIG. 29, a communication system 2900 includes a first network device 2901, a second network device 2902, a third network device 2903, a fourth network device 2904, and the terminal equipment 2905. The third network device 2903 is taken as a relay node, i.e. a first IAB-node, the fourth network device 2904 is a descendant IAB-node of the third network device 2903, i.e. the first IAB-node, and the terminal equipment 2905 is terminal equipment served by the third network device 2903, i.e. the first IAB-node.

For another example, the communication system includes a first network device, a third network device and terminal equipment. The first network device is the network device according to Embodiment 11 or 12, and the third network device is a network device according to Embodiment 10, that is, the third network device is taken as a relay node, i.e. a first IAB-node.

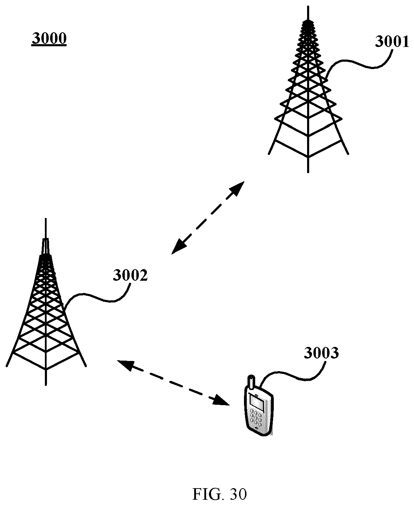

FIG. 30 is yet still another schematic diagram of the communication system of embodiment 13 of this disclosure. As shown in FIG. 30, a communication system 3000 includes a first network device 3001, a third network device 3002 and terminal equipment 3003. The third network device 3002 is taken as a relay node, i.e. a first IAB-node, and the first network device 3001 is a source IAB donor node or a target IAB donor node of the first IAB-node.

For another example, the communication system includes a first network device, a third network device, a fourth network device and terminal equipment. The first network device is the network device according to Embodiment 11 or 12, and the third network device is the network device according to Embodiment 10. That is, the third network device is taken as a relay node, i.e. a first IAB-node, the fourth network device is a descendant node of the first IAB-node, and the terminal equipment is terminal equipment served by the descendant node of the first IAB-node, or the terminal equipment is terminal equipment served by the first IAB-node.

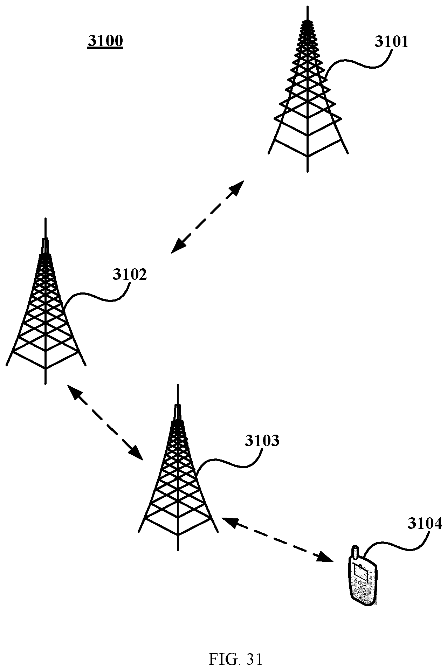

FIG. 31 is further still another schematic diagram of the communication system of embodiment 13 of this disclosure. As shown in FIG. 31, a communication system 3100 includes a first network device 3101, a third network device 3102, a fourth network device 3103 and terminal equipment 3104. The third network device 3102 is taken as a relay node, i.e. a first IAB-node, the fourth network device 3103 is a descendant IAB-node of the third network device 3102, i.e. the first IAB-node, and the terminal equipment 3104 is terminal equipment served by the fourth network device 3103, i.e. the descendant IAB-node of the first IAB-node.

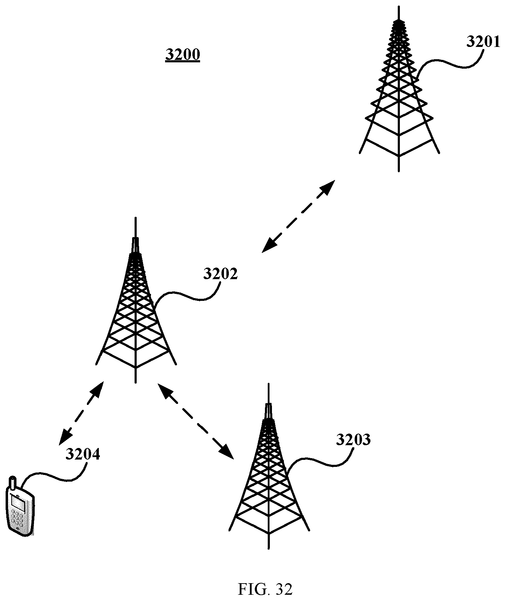

FIG. 32 is yet further another schematic diagram of the communication system of embodiment 13 of this disclosure. As shown in FIG. 32, a communication system 3200 includes a first network device 3201, a third network device 3202, a fourth network device 3203 and terminal equipment 3204. The third network device 3202 is taken as a relay node, i.e. a first IAB-node, the fourth network device 3203 is a descendant IAB-node of the third network device 3202, i.e. the first IAB-node, and the terminal equipment 3204 is terminal equipment served by the third network device 3202, i.e. the first IAB-node.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in FIG. 17 may either correspond to software modules of procedures of a computer program, or correspond to hardware modules. Such software modules may respectively correspond to the steps shown in FIG. 8. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile terminal, and may also be stored in a memory card of a pluggable mobile terminal. For example, if equipment (such as a mobile terminal) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in FIG. 17 may be realized as a universal processor, a digital signal processor (DSP), an applicationspecific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in FIG. 17 may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of this disclosure. Various variants and modifications may be made by those skilled in the art according to the principle of this disclosure, and such variants and modifications fall within the scope of this disclosure.

According to the implementations disclosed in the embodiments, following supplements are further disclosed.

### Supplement I

1. A migration apparatus for an IAB-node, applicable to a first IAB-node, the apparatus comprising:
   a first receiving unit configured to receive an RRC reconfiguration complete message of terminal equipment and/or a descendant IAB-node served by the first IAB-node; and
   a first transmitting unit configured to transmit a first uplink message containing the RRC reconfiguration complete message to a target IAB donor node via a target path, or transmit the RRC complete message to a target IAB donor node via a source IAB donor node.
2. The apparatus according to supplement 1, wherein the first transmitting unit comprises:
   a first storage unit configured to store the RRC reconfiguration complete message;
   a first establishment unit configured to establish the target path; and
   a second transmitting unit configured to transmit the first uplink message to the target IAB donor node via the target path.
3. The apparatus according to supplement 2, wherein the apparatus further comprises:
   a first suspending unit configured to suspend traffics with the terminal equipment and/or the descendant IAB-node when a first condition is satisfied.
4. The apparatus according to supplement 3, wherein the first condition comprises at least one of the following conditions that:
   RRC reconfiguration messages are transmitted to all terminal equipment and/or descendant IAB-nodes served by the first IAB-node, or RRC reconfiguration complete messages of all the terminal equipment and/or descendant IAB-nodes served by the first IAB-node are received;
   a first timer expires;
   the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio; and
   the number of the RRC reconfiguration messages transmitted by the first IAB-node to the terminal equipment and/or the descendant IAB-node served by the first IAB-node or the number of feedback of the RRC reconfiguration messages received from the RRC reconfiguration messages of the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio.
5. The apparatus according to supplement 2, wherein the apparatus further comprises:
   a third transmitting unit configured to transmit a feedback message of a first downlink message to the source IAB donor node when a second condition is satisfied.
6. The apparatus according to supplement 5, wherein the second condition comprises at least one of the following conditions that:
   RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
   a second timer expires;
   the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages transmitted by it or from which the first IAB-node receives the RRC reconfiguration complete messages reaches a third ratio; and
   the number of the RRC reconfiguration messages transmitted by the first IAB-node to the terminal equipment and/or the descendant IAB-node served by the first IAB-node or the number of received feedback of the RRC reconfiguration messages of the RRC reconfiguration messages of the terminal equipment and/or the descendant IAB-node served by the first IAB-node or the number of the received RRC reconfiguration complete messages of the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of received feedback of the RRC reconfiguration messages of the terminal equipment and/or the descendant IAB-node served by the first IAB-node or a ratio of the received RRC reconfiguration complete messages of the terminal equipment and/or the descendant IAB-node served by the first IAB-node reaches a fourth ratio.
7. The apparatus according to any one of supplements 2-6, wherein the apparatus further comprises:
   a second receiving unit configured to receive first indication information,
   the first indication information being used to indicate that the RRC reconfiguration complete message is an RRC reconfiguration complete message protected by security configuration configured by the target IAB donor node, or indicate that the RRC reconfiguration complete message is transmitted to the target IAB donor node, or indicate that the first IAB-node stores the RRC reconfiguration complete message.
8. The apparatus according to supplement 7, wherein,
   the first indication information is comprised in an RLC unit header, or is comprised in an MAC unit header.
9. The apparatus according to supplement 7 or 8, wherein the apparatus further comprises:
   a second storage unit configured to be used by an MAC layer or an RLC layer or a BAP layer of a distributed unit of the first IAB-node to store the RRC reconfiguration complete message.
10. The apparatus according to supplement 7 or 8, wherein the apparatus further comprises:
   a first delivering unit configured to be used by the MAC layer of the IAB-DU of the first IAB-node to deliver the first indication information to the RLC layer, or,
   a third storage unit configured to be used by a BAP layer of the IAB-MT to store the RRC reconfiguration complete message when the first IAB-node IAB-DU receives the first indication information; or,
   a fourth storage unit configured to be used by a BAP layer of the IAB-MT to store the RRC reconfiguration complete message when the first indication information is from a descendant IAB-node served by the first IAB-node; or,
   a second delivering unit configured to be used by the MAC layer or RLC layer of the IAB-DU of the first IAB-node to deliver the first indication information to the BAP layer.
11. The apparatus according to any one of supplements 2-10, wherein the first transmitting unit further comprises:
   a third receiving unit configured to receive a second RRC reconfiguration message from a source parent IAB-node;
   a random access unit configured to initiate a random access procedure towards a target parent node of the first IAB-node according to the second RRC reconfiguration message; and
   a first switching unit configured to switch to a target path.
12. The apparatus according to any one of supplements 2-11, wherein,
   the target path is an F1 interface between a distributed unit (DU) of the first IAB-node and a centralized unit (CU) of the target IAB donor node.
13. The apparatus according to any one of supplements 1-12, wherein,
   the first uplink message is a first F 1 message.
14. The apparatus according to supplement 13, wherein,
   the F1 message is at least one of UE context setup response message and UE context modification response message.
15. The apparatus according to supplement 14, wherein,
   the RRC reconfiguration complete message of the terminal equipment corresponding to the terminal equipment context setup response message or the terminal equipment context modification response message is included in the terminal equipment context setup response message or the terminal equipment context modification response message; or,
   the terminal equipment context setup response message or the terminal equipment context modification response message includes at least one RRC reconfiguration complete message, and for one RRC reconfiguration complete message in the at least one RRC reconfiguration complete message, terminal equipment transmitting this RRC reconfiguration complete message is identical to or different from terminal equipment associated with the terminal equipment context setup response message or the terminal equipment context modification response message.
16. The apparatus according to supplement 13, wherein,
   the first F1 message is a UL RRC Message Transfer message.
17. The apparatus according to supplement 16, wherein,
   all RRC reconfiguration complete messages are included in an uplink RRC message transfer message; or,
   all RRC reconfiguration complete messages transmitted by the terminal equipment are included in an uplink RRC message transfer message, and all RRC reconfiguration complete messages transmitted by the IAB descendant node(s) are included in a different uplink RRC message transfer message; or,
   RRC reconfiguration complete message(s) transmitted by terminal equipment or IAB descendant node(s) served by an IAB-node are included in one uplink RRC message transfer message, and RRC reconfiguration complete message(s) transmitted by terminal equipment or IAB descendant node(s) served by another IAB-node are included in one different uplink RRC message transfer message; or,
   an RRC reconfiguration complete message transmitted by terminal equipment served by an IAB-node is included in one uplink RRC message transfer message, and an RRC reconfiguration complete message transmitted by an IAB descendant node served by the IAB-node is included in one different uplink RRC message transfer message.
18. The apparatus according to any one of supplements 1-17, wherein the apparatus further comprises:
   a fourth receiving unit configured to receive a first downlink message from the source IAB donor node,
   the first downlink message comprising a first RRC reconfiguration message, the first RRC reconfiguration message comprising a key configured by the target IAB donor node.
19. The apparatus according to supplement 18, wherein,
   the first downlink message is a second F1 message.
20. The apparatus according to supplement 18 or 19, wherein,
   the first downlink message comprises at least one of the following:
   second indication information used for indicating that inter-CU IAB-node migration is to be performed, or indicating terminal equipment configuration performed for inter-CU IAB-node migration;
   a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node, and transmitting feedback of the first RRC reconfiguration message by the first IAB-node to the source IAB donor node; and
   the number and/or a ratio of at least one of terminal equipment, descendant IAB-node, message(s) and feedback(s).
21. The apparatus according to supplement 1, wherein the first transmitting unit comprises:
   a fourth transmitting unit configured to transmit a second uplink message containing the RRC reconfiguration complete message to the source IAB donor node, and
   the RRC reconfiguration complete message being transmitted by the source IAB donor node to the target IAB donor node.
22. The apparatus according to supplement 21, wherein,
   the RRC reconfiguration complete message is transmitted by the source IAB donor node to the target IAB donor node via an Xn interface or an NG interface.
23. The apparatus according to supplement 1 or 21 or 22, wherein,
   the second uplink message comprises third indication information,
   the third indication information being used to indicate that the source IAB donor node transmits the RRC reconfiguration complete message to the target IAB donor node.
24. The apparatus according to any one of supplements 1 and 21-23, wherein,
   the second uplink message is a third F 1 message.
25. The apparatus according to supplement 24, wherein,
   the third F1 message is at least one of UE context setup response message or UE context modification response message.
26. The apparatus according to supplement 25, wherein,
   the RRC reconfiguration complete message of the terminal equipment to which the terminal equipment context setup response message or the terminal equipment context modification response message corresponds is included in the terminal equipment context setup response message or the terminal equipment context modification response message; or,
   the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from terminal equipment with which the terminal equipment context setup response message or the terminal equipment context modification response message is associated.
27. The apparatus according to supplement 24, wherein,
   the third F1 message is a UL RRC Message Transfer message.
28. The apparatus according to supplement 27, wherein,
   all the RRC reconfiguration complete messages are included in a UL RRC Message Transfer message; or,
   all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or,
   an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in one different UL RRC Message Transfer message; or,
   an RRC reconfiguration complete message transmitted by terminal equipment served by an IAB-node is included in a UL RRC Message Transfer message, and an RRC reconfiguration complete message transmitted by an IAB sub-node served by the IAB-node is included in a different UL RRC Message Transfer message.
29. The apparatus according to any one of supplements 1-28, wherein,
   the RRC reconfiguration complete message includes a first RRC reconfiguration complete message and a second RRC reconfiguration complete message, the first RRC reconfiguration complete message being an RRC reconfiguration complete message generated by a first terminal equipment and/or a first descendant IAB-node served by the first IAB-node, and the second RRC reconfiguration complete message being an RRC reconfiguration complete message generated by a second terminal equipment and/or a second descendant IAB-node served by the first IAB-node,
   the first IAB-node transmits the first uplink message containing the first RRC reconfiguration complete message to the target IAB donor node via the target path, and the first IAB-node transmits the second uplink message containing the second RRC reconfiguration complete message to the source IAB donor node, so as to transmit the second RRC reconfiguration complete message to the target IAB donor node via the source IAB donor node.
30. A migration apparatus for an IAB-node, applicable to a first IAB donor node, the first IAB donor node being a source IAB donor node of a first IAB-node,
   the apparatus comprising:
   a fifth receiving unit configured to receive a second uplink message from the first IAB-node, the second uplink message comprising an RRC reconfiguration complete message of terminal equipment and/or a descendant IAB-node served by the first IAB-node; and
   a fifth transmitting unit configured to transmit the RRC reconfiguration complete message to a target IAB donor node of the first IAB-node.
31. The apparatus according to supplement 30, wherein,
   the fifth transmitting unit transmits an Xn message or an NG message comprising the RRC reconfiguration complete message to the target IAB donor node via an Xn interface or an NG interface.
32. The apparatus according to supplement 30 or 31, wherein,
   the second uplink message comprises third indication information,
   the third indication information being used to indicate that the source IAB donor node transmits the RRC reconfiguration complete message to the target IAB donor node.
33. The apparatus according to any one of supplements 30-32, wherein,
   the second uplink message is a third F 1 message.
34. The apparatus according to any one of supplements 30-33, wherein,
   the third F1 message is at least one of UE context setup response message or UE context modification response message, or
   the third F1 message is a UL RRC transfer message.
35. The apparatus according to supplement 34, wherein,
   the RRC reconfiguration complete message of the terminal equipment to which the terminal equipment context setup response message or the terminal equipment context modification response message corresponds is included in the terminal equipment context setup response message or the terminal equipment context modification response message; or,
   the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.
36. The apparatus according to supplement 34, wherein,
   all the RRC reconfiguration complete messages are included in a UL RRC Message Transfer message; or,
   all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or,
   an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in one different UL RRC Message Transfer message; or,
   an RRC reconfiguration complete message transmitted by terminal equipment served by an IAB-node is included in a UL RRC Message Transfer message, and an RRC reconfiguration complete message transmitted by an IAB sub-node served by the IAB-node is included in one different UL RRC Message Transfer message.
37. The apparatus according to any one of supplements 30-36, wherein the apparatus further comprises:
   a sixth transmitting unit configured to transmit a first downlink message to the first IAB-node, the first downlink message including a first RRC reconfiguration message.
38. The apparatus according to supplement 39, wherein,
   the second uplink message is also taken as a feedback message of the first downlink message; or,
   the apparatus further comprises: a sixth receiving unit configured to receive a feedback message of the first downlink message.
39. A migration apparatus for an IAB-node, applicable to a first IAB donor node, the first IAB donor node being a source IAB donor node of a first IAB-node,
   the apparatus comprising:
   a seventh receiving unit configured to receive a feedback message of a first downlink message comprising a first RRC reconfiguration message from the first IAB-node; and
   a seventh transmitting unit configured to transmit a second downlink message to a source parent IAB-node of the first IAB-node, the second downlink message comprising a second RRC reconfiguration message.
40. The apparatus according to supplement 39, wherein,
   when the first IAB donor node receives the feedback of the first RRC reconfiguration message from the first IAB-node, it transmits a second downlink message to the source parent IAB-node of the first IAB-node, the second downlink message comprising a second RRC reconfiguration message.
41. The apparatus according to supplement 39 or 40, wherein the apparatus further comprises:
   an eighth transmitting unit configured to transmit the first downlink message to the first IAB-node, the first downlink message including the first RRC reconfiguration message.
42. The apparatus according to any one of supplements 39-41, wherein,
   the first RRC reconfiguration message includes a key configured by the target IAB donor node of the first IAB-node.
43. The apparatus according to any one of supplements 39-42, wherein,
   the first downlink message is a second F1 message.
44. The apparatus according to any one of supplements 39-42, wherein,
   the first downlink message includes at least one of the following:
   second indication information used for indicating that inter-CU IAB-node migration is to be performed, or indicating terminal equipment configuration performed for inter-CU IAB-node migration;
   a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
   the number and/or a ratio of at least one of terminal equipment, descendant IAB-node, message(s) and feedback(s).
45. A migration apparatus for an IAB-node, applicable to a second IAB donor node, the second IAB donor node being a target IAB donor node of a first IAB-node,
   the apparatus comprising:
   an eighth receiving unit configured to receive a first uplink message including an RRC reconfiguration complete message transmitted by the first IAB-node via a target path; and/or
   a ninth receiving unit configured to receive an Xn message or NG message including an RRC reconfiguration complete message from a source IAB donor node,
   the RRC reconfiguration complete message being an RRC reconfiguration complete message of terminal equipment and/or descendant IAB-node served by the first IAB-node.
46. The apparatus according to supplement 45, wherein,
   the target path is an F1 interface between a distributed unit of the first IAB-node and a centralized unit of the target IAB donor node.
47. The apparatus according to supplement 45, wherein,
   the RRC reconfiguration complete message from the source IAB donor node is transmitted via an Xn interface or an NG interface.
48. A network device, comprising the apparatus as described in any one of supplements 1-47.
49. A communication system, comprising a first network device, a second network device and a terminal equipment,
   the first network device comprising the apparatus as described in any one of supplements 30-44,
   and the second network device comprising the apparatus as described in any one of supplements 45-27.
50. A communication system, comprising a first network device and a terminal equipment,
   the first network device comprising the apparatus as described in any one of supplements 30-44, or the first network device comprising the apparatus as described in any one of supplements 45-27.
51. A communication system, comprising a first network device, a second network device, a third network device and a terminal equipment,
   the first network device comprising the apparatus as described in any one of supplements 30-44,
   the second network device comprising the apparatus as described in any one of supplements 45-27,
   and the third network device comprising the apparatus as described in any one of supplements 1-29.
52. A communication system, comprising a first network device, a second network device, a third network device, a fourth network device and a terminal equipment,
   the first network device comprising the apparatus as described in any one of supplements 30-44,
   the second network device comprising the apparatus as described in any one of supplements 45-27,
   the third network device comprising the apparatus as described in any one of supplements 1-29.
   and the fourth network device being a descendant node of a first IAB-node.
53. The communication system according to supplement 52, wherein,
   the terminal equipment a terminal equipment served by the first IAB-node, or
   the terminal equipment a terminal equipment served by the descendant node of the first IAB-node.

### Supplement II

1. A migration method for an IAB-node, applicable to a first IAB-node, the method comprising:
   receiving an RRC reconfiguration complete message of terminal equipment and/or a descendant IAB-node served by the first IAB-node; and
   transmitting a first uplink message containing the RRC reconfiguration complete message to a target IAB donor node via a target path, or transmitting the RRC complete message to a target IAB donor node via a source IAB donor node.
2. The method according to supplement 1, wherein the transmitting a first uplink message containing the RRC reconfiguration complete message to a target IAB donor node via a target path comprises:
   storing the RRC reconfiguration complete message;
   establishing the target path; and
   transmitting the first uplink message to the target IAB donor node via the target path.
3. The method according to supplement 2, wherein the method further comprises:
   suspending traffics with the terminal equipment and/or the descendant IAB-node when a first condition is satisfied.
4. The method according to supplement 3, wherein the first condition comprises at least one of the following conditions that:
   RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
   a first timer expires;
   the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio; and
   the number of the RRC reconfiguration messages transmitted by the first IAB-node to the terminal equipment and/or the descendant IAB-node served by the first IAB-node or the number of feedback of the RRC reconfiguration messages received from the RRC reconfiguration messages of the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio.
5. The method according to supplement 2, wherein the method further comprises:
   transmitting a feedback message of a first downlink message to the source IAB donor node when a second condition is satisfied.
6. The method according to supplement 5, wherein the second condition comprises at least one of the following conditions that:
   RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
   a second timer expires;
   the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages of the RRC reconfiguration messages transmitted by it or from which the first IAB-node receives the RRC reconfiguration complete messages reaches a third ratio; and
   the number of the RRC reconfiguration messages transmitted by the first IAB-node to the terminal equipment and/or the descendant IAB-node served by the first IAB-node or the number of received feedback of the RRC reconfiguration messages of the RRC reconfiguration messages of the terminal equipment and/or the descendant IAB-node served by the first IAB-node or the number of the received RRC reconfiguration complete messages of the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of received feedback of the RRC reconfiguration messages of the terminal equipment and/or the descendant IAB-node served by the first IAB-node or a ratio of the received RRC reconfiguration complete messages of the terminal equipment and/or the descendant IAB-node served by the first IAB-node reaches a fourth ratio.
7. The method according to any one of supplements 2-6, wherein the method further comprises:
   receiving first indication information,
   the first indication information being used to indicate that the RRC reconfiguration complete message is an RRC reconfiguration complete message protected by security configuration configured by the target IAB donor node, or indicate that the RRC reconfiguration complete message is transmitted to the target IAB donor node, or indicate that the first IAB-node stores the RRC reconfiguration complete message.
8. The method according to supplement 7, wherein,
   the first indication information is comprised in an RLC unit header, or is comprised in an MAC unit header.
9. The method according to supplement 7 or 8, wherein the method further comprises:
   storing the RRC reconfiguration complete message by an MAC layer or an RLC layer or a BAP layer of a distributed unit of the first IAB-node.
10. The method according to supplement 7 or 8, wherein the method further comprises:
   transmitting the first indication information to the RLC layer by the MAC layer of the IAB-DU of the first IAB-node, or,
   storing the RRC reconfiguration complete message by a BAP layer of the IAB-MT when the first IAB-node IAB-DU receives the first indication information; or,
   storing the RRC reconfiguration complete message by a BAP layer of the IAB-MT when the first indication information is from a descendant IAB-node served by the first IAB-node; or,
   delivering the first indication information to the BAP layer by the MAC layer or RLC layer of the IAB-DU of the first IAB-node.
11. The method according to any one of supplements 2-10, wherein the transmitting a first uplink message containing the RRC reconfiguration complete message to a target IAB donor node via a target path further comprises:
   receiving a second RRC reconfiguration message from a source parent IAB-node;
   initiating a random access procedure towards a target parent node of the first IAB-node according to the second RRC reconfiguration message; and
   switching to a target path.
12. The method according to any one of supplements 2-11, wherein,
   the target path is an F1 interface between a distributed unit (DU) of the first IAB-node and a centralized unit (CU) of the target IAB donor node.
13. The method according to any one of supplements 1-12, wherein,
   the first uplink message is a first F 1 message.
14. The method according to supplement 13, wherein,
   the F1 message is at least one of UE context setup response message and UE context modification response message.
15. The method according to supplement 14, wherein,
   the RRC reconfiguration complete message of the terminal equipment corresponding to the terminal equipment context setup response message or the terminal equipment context modification response message is included in the terminal equipment context setup response message or the terminal equipment context modification response message; or,
   the terminal equipment context setup response message or the terminal equipment context modification response message includes at least one RRC reconfiguration complete message, and for one RRC reconfiguration complete message in the at least one RRC reconfiguration complete message, terminal equipment transmitting this RRC reconfiguration complete message is identical to or different from terminal equipment associated with the terminal equipment context setup response message or the terminal equipment context modification response message.
16. The method according to supplement 13, wherein,
   the first F 1 message is a UL RRC Message Transfer message.
17. The method according to supplement 16, wherein,
   all RRC reconfiguration complete messages are included in an uplink RRC message transfer message; or,
   all RRC reconfiguration complete messages transmitted by the terminal equipment are included in an uplink RRC message transfer message, and all RRC reconfiguration complete messages transmitted by the IAB descendant node(s) are included in a different uplink RRC message transfer message; or,
   RRC reconfiguration complete message(s) transmitted by terminal equipment or IAB descendant node(s) served by an IAB-node are included in an uplink RRC message transfer message, and RRC reconfiguration complete message transmitted by terminal equipment or IAB descendant node(s) served by another IAB-node are included in one different uplink RRC message transfer message; or,
   an RRC reconfiguration complete message transmitted by terminal equipment served by an IAB-node is included in one uplink RRC message transfer message, and an RRC reconfiguration complete message transmitted by an IAB descendant node served by the IAB-node is included in one different uplink RRC message transfer message.
18. The method according to any one of supplements 1-17, wherein the method further comprises:
   receiving a first downlink message from the source IAB donor node,
   the first downlink message comprising a first RRC reconfiguration message, the first RRC reconfiguration message comprising a key configured by the target IAB donor node.
19. The method according to supplement 18, wherein,
   the first downlink message is a second F 1 message.
20. The method according to supplement 18 or 19, wherein,
   the first downlink message comprises at least one of the following:
   second indication information used for indicating that inter-CU IAB-node migration is to be performed, or indicating terminal equipment configuration performed for inter-CU IAB-node migration;
   a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
   the number and/or a ratio of at least one of terminal equipment, descendant IAB-node, message(s) and feedback(s).
21. The method according to supplement 1, wherein the transmitting the RRC complete message by the first IAB-node to a target IAB donor node via a source IAB donor node comprises:
   transmitting a second uplink message containing the RRC reconfiguration complete message by the first IAB-node to the source IAB donor node, and
   the RRC reconfiguration complete message being transmitted by the source IAB donor node to the target IAB donor node.
22. The method according to supplement 21, wherein,
   the RRC reconfiguration complete message is transmitted by the source IAB donor node to the target IAB donor node via an Xn interface or an NG interface.
23. The method according to supplement 1 or 21 or 22, wherein,
   the second uplink message comprises third indication information,
   the third indication information being used to indicate that the source IAB donor node transmits the RRC reconfiguration complete message to the target IAB donor node.
24. The method according to any one of supplements 1 and 21-23, wherein,
   the second uplink message is a third F 1 message.
25. The method according to supplement 24, wherein,
   the third F1 message is at least one of UE context setup response message or UE context modification response message.
26. The method according to supplement 25, wherein,
   the RRC reconfiguration complete message of the terminal equipment to which the terminal equipment context setup response message or the terminal equipment context modification response message corresponds is included in the terminal equipment context setup response message or the terminal equipment context modification response message; or,
   the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.
27. The method according to supplement 24, wherein,
   the third F1 message is a UL RRC Message Transfer message.
28. The method according to supplement 27, wherein,
   all the RRC reconfiguration complete messages are included in a UL RRC Message Transfer message; or,
   all the RRC reconfiguration complete messages transmitted by the terminal equipment are included in a UL RRC Message Transfer message, and all RRC reconfiguration complete messages transmitted by the IAB sub-node are included in one different UL RRC Message Transfer message; or,
   an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in one different UL RRC Message Transfer message; or,
   an RRC reconfiguration complete message transmitted by terminal equipment served by an IAB-node is included in a UL RRC Message Transfer message, and an RRC reconfiguration complete message transmitted by an IAB sub-node served by the IAB-node is included in one different UL RRC Message Transfer message.
29. The method according to any one of supplements 1-28, wherein,
   the RRC reconfiguration complete message includes a first RRC reconfiguration complete message and a second RRC reconfiguration complete message, the first RRC reconfiguration complete message being an RRC reconfiguration complete message generated by a first terminal equipment and/or a first descendant IAB-node served by the first IAB-node, and the second RRC reconfiguration complete message being an RRC reconfiguration complete message generated by a second terminal equipment and/or a second descendant IAB-node served by the first IAB-node,
   the first IAB-node transmits the first uplink message containing the first RRC reconfiguration complete message to the target IAB donor node via the target path, and the first IAB-node transmits the second uplink message containing the second RRC reconfiguration complete message to the source IAB donor node, so as to transmit the second RRC reconfiguration complete message to the target IAB donor node via the source IAB donor node.
30. A migration method for an IAB-node, applicable to a first IAB donor node, the first IAB donor node being a source IAB donor node of a first IAB-node,
   the method comprising:
   receiving a second uplink message from the first IAB-node, the second uplink message comprising an RRC reconfiguration complete message of terminal equipment and/or a descendant IAB-node served by the first IAB-node; and
   transmitting the RRC reconfiguration complete message to a target IAB donor node of the first IAB-node.
31. The method according to supplement 30, wherein the transmitting the RRC reconfiguration complete message to a target IAB donor node of the first IAB-node comprises:
   transmitting the RRC reconfiguration complete message to the target IAB donor node via an Xn interface or an NG interface.
32. The method according to supplement 30 or 31, wherein,
   the second uplink message comprises third indication information,
   the third indication information being used to indicate that the source IAB donor node transmits the RRC reconfiguration complete message to the target IAB donor node.
33. The method according to any one of supplements 30-32, wherein,
   the second uplink message is a third F1 message.
34. The method according to any one of supplements 30-33, wherein,
   the third F1 message is at least one of UE context setup response message or UE context modification response message, or
   the third F1 message is a UL RRC transfer message.
35. The method according to supplement 34, wherein,
   the RRC reconfiguration complete message of the terminal equipment to which the terminal equipment context setup response message or the terminal equipment context modification response message corresponds is included in the terminal equipment context setup response message or the terminal equipment context modification response message; or,
   the terminal equipment context setup response message or the terminal equipment context modification response message includes at least one RRC reconfiguration complete message, and for one of the at least one RRC reconfiguration complete message, terminal equipment transmitting this RRC reconfiguration complete message is identical to or different from a terminal with which the terminal equipment context setup response message or the terminal equipment context modification response message is associated.
36. The method according to supplement 34, wherein,
   all the RRC reconfiguration complete messages are included in a UL RRC Message Transfer message; or,
   all the RRC reconfiguration complete messages transmitted by the terminal equipment are included in a UL RRC Message Transfer message, and all RRC reconfiguration complete messages transmitted by the IAB sub-node are included in a different UL RRC Message Transfer message; or,
   an RRC reconfiguration complete message transmitted by terminal equipment or IAB sub-node served by one IAB-node is included in a UL RRC Message Transfer message, and an RRC reconfiguration complete message transmitted by terminal equipment or IAB sub-node served another IAB-node is included in one different UL RRC Message Transfer message; or,
   an RRC reconfiguration complete message transmitted by terminal equipment served by an IAB-node is included in a UL RRC Message Transfer message, and an RRC reconfiguration complete message transmitted by an IAB sub-node served by the IAB-node is included in one different UL RRC Message Transfer message.
37. The method according to any one of supplements 30-36, wherein the method further comprises:
   transmitting a first downlink message to the first IAB-node, the first downlink message including a first RRC reconfiguration message.
38. The method according to supplement 39, wherein,
   the second uplink message is also taken as a feedback message of the first downlink message; or,
   the method further comprises: receiving a feedback message of the first downlink message.
39. A migration method for an IAB-node, applicable to a first IAB donor node, the first IAB donor node being a source IAB donor node of a first IAB-node,
   the method comprising:
   receiving a feedback message of a first downlink message comprising a first RRC reconfiguration message from the first IAB-node; and
   transmitting a second downlink message to a source parent IAB-node of the first IAB-node, the second downlink message comprising a second RRC reconfiguration message.
40. The method according to supplement 39, wherein,
   when the first IAB donor node receives the feedback of the first RRC reconfiguration message from the first IAB-node, it transmits a second downlink message to the source parent IAB-node of the first IAB-node, the second downlink message comprising a second RRC reconfiguration message.
41. The method according to supplement 39 or 40, wherein the method further comprises:
   transmitting the first downlink message to the first IAB-node, the first downlink message including the first RRC reconfiguration message.
42. The method according to any one of supplements 39-41, wherein,
   the first RRC reconfiguration message includes a key configured by the target IAB donor node of the first IAB-node.
43. The method according to any one of supplements 39-42, wherein,
   the first downlink message is a second F1 message.
44. The method according to any one of supplements 39-42, wherein,
   the first downlink message includes at least one of the following:
   second indication information used for indicating that inter-CU IAB-node migration is to be performed, or indicating terminal equipment configuration performed for inter-CU IAB-node migration;
   a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
   the number and/or a ratio of at least one of terminal equipment, descendant IAB-node, message(s) and feedback(s).
45. A migration method for an IAB-node, applicable to a second IAB donor node, the second IAB donor node being a target IAB donor node of a first IAB-node,
   the method comprising:
   receiving a first uplink message including an RRC reconfiguration complete message transmitted by the first IAB-node via a target path; and/or
   receiving an Xn message or NG message including an RRC reconfiguration complete message from a source IAB donor node,
   the RRC reconfiguration complete message being an RRC reconfiguration complete message of terminal equipment and/or descendant IAB-node served by the first IAB-node.
46. The method according to supplement 45, wherein,
   the target path is an F1 interface between a distributed unit of the first IAB-node and a centralized unit of the target IAB donor node.
47. The method according to supplement 45, wherein,
   the RRC reconfiguration complete message from the source IAB donor node is transmitted via an Xn interface or an NG interface.

## Claims

1. A migration apparatus for an IAB-node, applicable to a first IAB-node, the apparatus comprising:
a first receiving unit configured to receive an RRC reconfiguration complete message of terminal equipment and/or a descendant IAB-node served by the first IAB-node; and
a first transmitting unit configured to transmit a first uplink message containing the RRC reconfiguration complete message to a target IAB donor node via a target path, or transmit the RRC complete message to a target IAB donor node via a source IAB donor node.

2. The apparatus according to claim 1, wherein the first transmitting unit comprises:
a first storage unit configured to store the RRC reconfiguration complete message;
a first establishment unit configured to establish the target path; and
a second transmitting unit configured to transmit the first uplink message to the target IAB donor node via the target path.

3. The apparatus according to claim 2, wherein the apparatus further comprises:
a first interruptg unit configured to suspend traffics with the terminal equipment and/or the descendant IAB-node when a first condition is satisfied.

4. The apparatus according to claim 3, wherein the first condition comprises at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a first timer expires;
the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a first configuration value, and/or, a ratio of terminal equipment and/or descendant IAB-nodes to which the first IAB-node transmits the RRC reconfiguration messages or from which the first IAB-node receives feedback of the RRC reconfiguration messages or from which the first IAB-node receives the RRC reconfiguration complete messages reaches a first ratio; and
the number of the RRC reconfiguration messages transmitted by the first IAB-node to the terminal equipment and/or the descendant IAB-node served by the first IAB-node or the number of feedback of the RRC reconfiguration messages received from the terminal equipment and/or the descendant IAB-node served by the first IAB-node or the number of the RRC reconfiguration complete messages received from the terminal equipment and/or the descendant IAB-node served by the first IAB-node reaches a second configuration value, and/or, a ratio of the RRC reconfiguration messages transmitted by the first IAB-node to the terminal equipment and/or the descendant IAB-node served by the first IAB-node or a ratio of feedback of the RRC reconfiguration messages from the terminal equipment and/or the descendant IAB-node served by the first IAB-node or a ratio of the RRC reconfiguration complete messages received from the terminal equipment and/or the descendant IAB-node served by the first IAB-node reaches a second ratio.

5. The apparatus according to claim 2, wherein the apparatus further comprises:
a third transmitting unit configured to transmit a feedback message of a first downlink message to the source IAB donor node when a second condition is satisfied.

6. The apparatus according to claim 5, wherein the second condition comprises at least one of the following conditions that:
RRC reconfiguration messages are transmitted to all terminal equipment and/or descendant IAB-nodes served by the first IAB-node or RRC reconfiguration complete messages of all the terminal equipment and/or descendant IAB-nodes served by the first IAB-node are received;
a second timer expires;
the number of terminal equipment and/or descendant IAB-nodes to which the first IAB-node transmits the RRC reconfiguration messages or from which the first IAB-node receives feedback messages of the RRC reconfiguration messages transmitted by it or from which the first IAB-node receives the RRC reconfiguration complete messages reaches a third configuration value, and/or, a ratio of terminal equipment and/or descendant IAB-nodes to which the first IAB-node transmits the RRC reconfiguration messages or from which the first IAB-node receives feedback of the RRC reconfiguration messages of the RRC reconfiguration messages transmitted by it or from which the first IAB-node receives the RRC reconfiguration complete messages reaches a third ratio; and
the number of the RRC reconfiguration messages transmitted by the first IAB-node to the terminal equipment and/or the descendant IAB-node served by the first IAB-node or the number of received feedback of the RRC reconfiguration messages of the RRC reconfiguration messages of the terminal equipment and/or the descendant IAB-node served by the first IAB-node or the number of the received RRC reconfiguration complete messages of the terminal equipment and/or the descendant IAB-node served by the first IAB-node reaches a fourth configuration value, and/or, a ratio of the RRC reconfiguration messages transmitted by the first IAB-node to the terminal equipment and/or the descendant IAB-node served by the first IAB-node or a ratio of received feedback of the RRC reconfiguration messages of the terminal equipment and/or the descendant IAB-node served by the first IAB-node or a ratio of the received RRC reconfiguration complete messages of the terminal equipment and/or the descendant IAB-node served by the first IAB-node reaches a fourth ratio.

7. The apparatus according to claim 2, wherein the apparatus further comprises:
a second receiving unit configured to receive first indication information,
the first indication information being used to indicate that the RRC reconfiguration complete message is an RRC reconfiguration complete message protected by security configuration configured by the target IAB donor node, or indicate that the RRC reconfiguration complete message is transmitted to the target IAB donor node, or indicate that the first IAB-node stores the RRC reconfiguration complete message.

8. The apparatus according to claim 7, wherein,
the first indication information is comprised in an RLC unit header, or is comprised in an MAC unit header.

9. The apparatus according to claim 7, wherein the apparatus further comprises:
a second storage unit configured to be used by an MAC layer or an RLC layer or a BAP layer of a distributed unit of the first IAB-node to store the RRC reconfiguration complete message.

10. The apparatus according to claim 2, wherein,
the target path is an F1 interface between a distributed unit (DU) of the first IAB-node and a centralized unit (CU) of the target IAB donor node.

11. The apparatus according to claim 1, wherein the apparatus further comprises:
a fourth receiving unit configured to receive a first downlink message from the source IAB donor node,
the first downlink message comprising a first RRC reconfiguration message, the first RRC reconfiguration message comprising a key configured by the target IAB donor node.

12. The apparatus according to claim 11, wherein,
the first downlink message comprises at least one of the following:
second indication information used for indicating that inter-CU IAB-node migration is to be performed, or indicating terminal equipment configuration performed for inter-CU IAB-node migration;
a value of the first timer or the second timer, the first timer or the second timer being used for at least one of initiating a random access procedure with a target parent IAB-node by the first IAB-node, establishing an F1 interface between the distributed unit of the first IAB-node and the centralized unit of the target IAB donor node and transmitting feedback of the first RRC reconfiguration message by the first IAB-node to the source IAB donor node; and
the number and/or a ratio of at least one of terminal equipment, descendant IAB-node, message(s) and feedback(s).

13. The apparatus according to claim 1, wherein the first transmitting unit comprises:
a fourth transmitting unit configured to transmit a second uplink message containing the RRC reconfiguration complete message to the source IAB donor node,
the RRC reconfiguration complete message being transmitted by the source IAB donor node to the target IAB donor node.

14. The apparatus according to claim 13, wherein,
the RRC reconfiguration complete message is transmitted by the source IAB donor node to the target IAB donor node via an Xn interface or an NG interface.

15. The apparatus according to claim 13, wherein,
the second uplink message comprises third indication information,
the third indication information being used to indicate that the source IAB donor node transmits the RRC reconfiguration complete message to the target IAB donor node.

16. A migration apparatus for an IAB-node, applicable to a first IAB donor node, the first IAB donor node being a source IAB donor node of a first IAB-node,
the apparatus comprising:
a fifth receiving unit configured to receive a second uplink message from the first IAB-node, the second uplink message comprising an RRC reconfiguration complete message of terminal equipment and/or a descendant IAB-node served by the first IAB-node; and
a fifth transmitting unit configured to transmit the RRC reconfiguration complete message to a target IAB donor node of the first IAB-node.

17. The apparatus according to claim 16, wherein,
the fifth transmitting unit transmits an Xn message or an NG message comprising the RRC reconfiguration complete message to the target IAB donor node via an Xn interface or an NG interface.

18. The apparatus according to claim 16, wherein,
the second uplink message comprises third indication information,
the third indication information being used to indicate that the source IAB donor node transmits the RRC reconfiguration completion message to the target IAB donor node.

19. A migration apparatus for an IAB-node, applicable to a first IAB donor node, the first IAB donor node being a source IAB donor node of a first IAB-node,
the apparatus comprising:
a seventh receiving unit configured to receive a feedback message of a first downlink message comprising a first RRC reconfiguration message from the first IAB-node; and
a seventh transmitting unit configured to transmit a second downlink message to a source parent IAB-node of the first IAB-node, the second downlink message comprising a second RRC reconfiguration message.

20. The apparatus according to claim 19, wherein,
when the first IAB donor node receives the feedback of the first RRC reconfiguration message from the first IAB-node, it transmits a second downlink message to the source parent IAB-node of the first IAB-node, the second downlink message comprising a second RRC reconfiguration message.
